# FASCICULE DE BREVET EUROPEEN

(11) **EP 3 882 044 B1**
(45) Date de publication et mention de la délivrance du brevet: **14.12.2022**
(21) Numéro de dépôt: 21160921.9
(22) Date de dépôt: 05.03.2021
(51) Int. Cl.: B60B 21/02, B60B 1/00, B60B 25/22, B60B 21/06, B60B 21/12, B60B 5/02

(54) **JANTE POUR ROUE DE CYCLE AVEC MISE A L'AIR LIBRE, ROUE ET ENSEMBLE DE ROULAGE AVEC UNE TELLE JANTE**
RADFELGE FÜR EIN FAHRRAD MIT LUFTABLASSVORRICHTUNG, RAD UND RADANORDNUNG MIT EINER SOLCHEN FELGE
RIM FOR CYCLE WHEEL WITH VENTING, WHEEL AND RUN ASSEMBLY WITH SUCH A RIM

(30) Priorité: 13.03.2020 FR 2002510
(43) Date de publication de la demande: 22.09.2021
(73) Titulaire: Corima, 26270 Loriol-sur-Drôme (FR)
(72) Inventeur: MARTIN, Pierre-Jean, 26270 LORIOL-SUR-DRÔME (FR); DUPONT, Thomas, 26270 LORIOL-SUR-DRÔME (FR)
(74) Mandataire: Cabinet Beau de Loménie

(56) Documents cités:
- FR-A1- 2 672 251
- US-A- 5 975 645
- US-A- 6 155 651

## Description

### Domaine Technique

L'invention concerne le domaine des roues de cycle.

### Technique antérieure

Une roue de cycle comporte, de manière classique, une jante qui est reliée à un moyeu par des rayons, tendus ou non tendus, par des bâtons réalisés en une seule pièce avec la jante, ou, dans le cas des roues « disques », notamment « paraculaires » ou « lenticulaires », par deux flasques surfaciques, les flasques étant sensiblement perpendiculaires à l'axe de révolution de roue pour les roues « paraculaires » ou formant un volume bi-convexe analogue à celui d'une lentille optique dans le cas des roues « lenticulaires ».

La jante comporte un corps de jante qui est un solide de révolution autour de l'axe de révolution et qui comprend deux parois latérales et un pont transversal externe qui relie les deux parois latérales. Les deux parois latérales du corps de jante ont chacune une portion radiale externe qui s'étend radialement vers l'extérieur par rapport à l'axe de révolution et par rapport au pont transversal externe de sorte que les portions radiales externes et le pont transversal externe délimitent une gorge d'accueil qui est ouverte radialement vers l'extérieur et qui est destinée à accueillir un bandage pneumatique gonflé par une pression gazeuse.

Le bandage pneumatique est par exemple un pneumatique à section ouverte qui est monté sur la jante. Le bandage pneumatique peut être monté avec la présence d'une chambre à air. La chambre à air vient donc emplir le volume toroïdal délimité par la coopération de la gorge d'accueil du corps de jante et par le bandage pneumatique. Le bandage pneumatique peut être monté sans la présence d'une chambre à air. On parle alors d'un montage « tubeless », c'est-à-dire sans chambre à air.

De manière classique les deux parois latérales du corps de jante sont réunies à leur extrémité radiale interne par une portion radiale interne du corps de jante pour délimiter, radialement vers l'intérieur par rapport au pont transversal externe, au moins un espace intérieur fermé par les deux parois latérales et par le pont transversal externe.

Le corps de jante est généralement réalisé soit en matériaux métalliques, notamment en alliage d'aluminium, soit en matériaux polymères, soit en matériau composite.

Le corps de jante est généralement un corps creux qui présente un espace intérieur qui est vide. Cependant, notamment dans le cas des jantes dont le corps de jante est réalisé en matériau composite, au moins un compartiment principal de l'espace intérieur peut être empli d'une âme en matériau(x) de remplissage. Comme il sera vu plus loin, le matériau de l'âme du corps de jante peut être un matériau alvéolaire à cellules fermées, notamment de type mousse à cellules fermées, par exemple une mousse de matière polymère, par exemple une mousse de polyuréthane.

Le document FR-2.672.251 décrit une jante de roue en matériaux composites pour cycle et analogues, comprenant deux caissons adjacents possédant une paroi commune et constitués chacun par une âme en matériau alvéolaire de structure et par une enveloppe à caractère rigide.

Une des conséquences de la présence d'une âme en matériaux alvéolaires à cellules fermées, ou de manière plus général d'un matériau de remplissage imperméable aux gaz, donc imperméable à l'air, est que le volume libre à l'intérieur de l'espace intérieur, et plus particulièrement à l'intérieur du compartiment principal est particulièrement réduit, puisque tout le volume occupé par les cellules fermées est inaccessible à un gaz venant de l'extérieur de l'âme.

Les roues pour cycle sont conçues de telle sorte que le gaz sous pression qui est enfermé dans le bandage pneumatique pour en assurer le gonflage, en présence ou en l'absence d'une chambre à air, soit confiné à l'intérieur du bandage pneumatique. En présence d'une chambre à air, c'est la chambre à air elle-même qui confine le gaz sous pression, la chambre étant elle-même enfermée dans le volume délimité d'une part par la gorge d'accueil du corps de jante, et d'autre part par le bandage pneumatique à section ouverte. En l'absence de chambre à air, il est prévu des moyens d'étanchéité qui font que l'air emprisonné entre le bandage pneumatique et la gorge d'accueil ne peut pas fuir vers l'extérieur, et ne peut pas fuir vers l'espace intérieur du corps de jante.

Dans toutes les jantes, il est prévu un évidement pour le passage d'une valve de gonflage du bandage pneumatique qui traverse le corps de jante selon une direction sensiblement radiale. Un tel évidement est généralement appelé puits de valve. Ce puits de valve débouche donc dans le pont transversal externe au niveau d'un perçage de celui-ci. Bien entendu, dans le cas d'un montage sans chambre à air, la valve est montée dans cet évidement de telle manière que le gaz sous pression ne puisse, en fonctionnement normal, pas s'échapper vers l'espace intérieur du corps de jante.

Dans de nombreuses jantes à rayons, le pont transversal supérieur du corps de jante présente des perçages qui permettent d'accéder à des zones de fixation des rayons sur le corps de jante. Dans ce cas, la jante peut comporter un ruban de fond de jante qui est rapporté sur la face externe du pont transversal externe qui est tournée vers la gorge d'accueil. Le ruban de fond de jante vient former une étanchéité entre l'espace intérieur et le compartiment sous pression délimité par le fond de jante, par la gorge d'accueil, et par le bandage pneumatique.

Cependant, ces précautions d'étanchéité peuvent se révéler défectueuses. Ainsi, le fond de jante peut se retrouver mal positionné et peut ainsi mal assurer l'étanchéité, au moins localement. Dans d'autres cas, l'étanchéité au niveau de la valve peut être déficiente. Enfin, dans certains cas, notamment en cas de réalisation du corps de jante en matériau composite, le pont transversal externe peut présenter, au moins localement, une porosité vis-à-vis du gaz sous pression. En cas d'un tel défaut d'étanchéité, le gaz sous pression peut alors fuir en direction de l'espace intérieur du corps de jante. Ceci est particulièrement vrai dans le cas d'un montage sans chambre à air. Cependant, dans des conditions particulières, on peut retrouver le même problème de fuite d'air sous pression vers l'espace intérieur du corps de jante dans le cas d'un montage avec chambre à air.

Dans le cas d'un corps de jante présentant un compartiment principal empli d'une âme en matériau de remplissage imperméable à l'air, une telle fuite d'air sous pression en direction de l'espace intérieur peut se révéler problématique. En effet, on comprend que la présence de l'âme minimise le volume libre dans l'espace intérieur dans lequel peut être accueilli le gaz sous pression qui fuit depuis la zone sous pression de la roue, c'est-à-dire depuis le pneumatique ou depuis la chambre à air. De plus, il se peut que le volume libre total dans l'espace intérieur, non rempli par l'âme, soit subdivisé en volumes libres élémentaires par la présence même de l'âme. Du fait du faible volume libre total, et du volume encore plus faible d'éventuels volumes libres élémentaires, il s'ensuit que la pression, créée par la fuite de gaz sous pression vers l'espace intérieur, génère, dans le volume libre total ou le volume libre élémentaire de l'espace intérieur, une pression qui ne peut pas être négligée. Cela est particulièrement vrai si la pression de gonflage du pneumatique est élevée, par exemple supérieur à 5 bars au-dessus de la pression atmosphérique. En effet, dans ce cas-là, la pression de gaz dans le volume libre total ou dans le volume libre élémentaire peut être de plusieurs bars, voire proche de la pression de gonflage s'il s'agit d'un volume libre élémentaire de très faible volume. Or, le corps de jante n'est pas dimensionné pour fonctionner avec une pression à l'intérieur de l'espace intérieur. Des exemples ont montré que, notamment pour des jantes dont le corps de jante est réalisé en matériau composite, une surpression dans l'espace intérieur du corps de jante peut conduire à une dégradation importante de la jante. Notamment, les parois latérales du corps de jante, dont l'épaisseur est souvent minimisée pour réduire le plus possible le poids et l'inertie de la jante, peuvent, sous l'effet combiné de la pression et des efforts mécaniques engendrés par l'utilisation de la roue, conduire à une rupture au moins locale de la paroi latérale.

Pour éviter les risques de dégradations liées à des surpressions, il a déjà été proposé sur le marché de prévoir un passage à l'air libre permettant une communication gazeuse entre l'espace intérieur et l'air ambiant, soit sous la forme d'un simple perçage dans la paroi latérale, soit sous la forme d'un écrou de valve prévu pour le montage de la valve de gonflage du bandage pneumatique, l'écrou ayant un passage à l'air libre permettant une communication gazeuse entre l'espace intérieur et l'air ambiant.

Dans les jantes comprenant un corps de jante ayant, dans leur espace intérieur, un compartiment principal empli d'un matériau de remplissage, ce que l'on trouve souvent pour des jantes dont le corps de jante est réalisé en matériau composite, on trouve des évidements qui sont destinés à accueillir des moyens d'accrochage de rayons. De tels évidements, parfois appelés « puits de rayons », constituent des volumes libres élémentaires tels que discutés ci-dessus. Or, dans les jantes dont un compartiment principal est empli d'un matériau de remplissage imperméable à l'air, ces puits de rayons sont isolés fluidiquement l'un de l'autre. Ils sont aussi isolés du puits de valve. De ce fait, pour se prémunir de tout risque de dégradation dû à une surpression au niveau de chacun des évidements, il faudrait prévoir, au niveau de chacun d'eux, un passage à l'air libre.

L'invention a donc pour objectif de proposer une conception d'une jante pour roue de cycle qui soit résistante aux surpressions dues à des éventuelles fuites de gaz sous pression en provenance du bandage pneumatique et en direction de l'espace intérieur du corps de jante, avec une conception légère et ne remettant pas en cause l'équilibre dynamique de la jante.

### Exposé de l'invention

L'invention propose donc une jante pour une roue de cycle ayant un axe de révolution, dans laquelle :
- la jante comporte un corps de jante, qui est par exemple un solide de révolution autour de l'axe de révolution, et qui comprend deux parois latérales et un pont transversal externe qui relie les deux parois latérales ;
- les deux parois latérales du corps de jante ont chacune une portion radiale externe qui s'étend radialement vers l'extérieur par rapport à l'axe de révolution et par rapport au pont transversal externe de sorte que les portions radiales externes et le pont transversal externe délimitent une gorge d'accueil qui est ouverte radialement vers l'extérieur et qui est destinée à accueillir un bandage pneumatique gonflé par une pression gazeuse ;
- les deux parois latérales du corps de jante sont réunies à leur extrémité radiale interne par une portion radiale interne du corps de jante pour délimiter, radialement vers l'intérieur par rapport au pont transversal externe, un espace intérieur fermé par les deux parois latérales et par le pont transversal externe, l'espace intérieur comportant au moins un compartiment principal empli d'une âme en matériau de remplissage.

Selon l'invention, la jante comporte au moins une galerie périphérique de mise à l'air libre qui est perméable aux gaz, qui communique fluidiquement avec le compartiment principal, et qui communique fluidiquement par au moins un évent de mise à l'air libre avec l'extérieur du corps de jante.

D'autre caractéristiques optionnelles de l'invention, qui peuvent être mises en œuvre seules ou en combinaison entre elles sont maintenant évoquées.

La galerie périphérique de mise à l'air libre peut être une galerie creuse.

La galerie périphérique de mise à l'air libre peut être une galerie au moins partiellement emplie d'un matériau perméable aux gaz.

La galerie périphérique de mise à l'air libre peut être aménagée dans le compartiment principal de l'espace intérieur du corps de jante.

La galerie périphérique de mise à l'air libre peut être aménagée dans l'âme en matériau de remplissage de la jante.

La galerie périphérique de mise à l'air libre peut être une galerie creuse formée par un évidement dans l'âme en matériau de remplissage de la jante, notamment dans le cas d'une âme en matériau de remplissage constitué de ou comportant un matériau alvéolaire à cellules fermées.

La galerie périphérique de mise à l'air libre peut être aménagée dans l'âme en matériau de remplissage de la jante, à distance des parois qui délimitent l'espace intérieur.

La galerie périphérique de mise à l'air libre peut être aménagée au contact d'une face interne du pont transversal externe.

La galerie périphérique de mise à l'air libre peut être aménagée entre le pont transversal externe et un second pont transversal qui relie les deux parois latérales du corps de jante et qui est agencé radialement vers l'intérieur par rapport au pont transversal externe de manière à délimiter, entre le pont transversal externe et le second pont transversal, un compartiment secondaire distinct du compartiment principal.

Le compartiment secondaire peut être un espace vide.

La galerie périphérique de mise à l'air libre peut être aménagée au moins en partie dans le pont transversal externe.

La galerie périphérique de mise à l'air libre peut être aménagée dans une face externe du pont transversal externe qui est tournée vers la gorge d'accueil, la galerie périphérique de mise à l'air libre formant une rainure ouverte en direction de la gorge d'accueil, et la jante comportant alors un ruban de fond de jante qui est rapporté sur la face externe du pont transversal externe et qui referme la rainure de manière étanche par rapport à la gorge d'accueil.

La galerie périphérique de mise à l'air libre peut relier fluidiquement entre eux une pluralité d'évidements formés dans l'espace intérieur du corps de jante.

L'âme en matériau de remplissage peut comporter des évidements qui sont destinés à accueillir des moyens de fixation de rayons, et plusieurs évidements qui sont destinés à accueillir des moyens de fixation de rayons peuvent être reliés fluidiquement à la même galerie périphérique de mise à l'air libre.

L'âme en matériau de remplissage peut comporter un évidement pour le passage d'une valve de gonflage du bandage pneumatique, et ledit évidement peut être relié fluidiquement à la galerie périphérique de mise à l'air libre.

La galerie périphérique de mise à l'air libre peut comporter plusieurs tronçons qui sont reliés fluidiquement entre eux.

La galerie périphérique de mise à l'air libre peut comporter plusieurs tronçons de galerie périphérique de mise à l'air libre qui sont reliés fluidiquement entre eux et qui s'étendent au moins en partie le long d'un secteur angulaire commun autour de l'axe de révolution.

La jante peut comporter plusieurs galeries périphériques de mise à l'air libre distinctes qui sont isolées fluidiquement l'une de l'autre et qui communiquent chacune fluidiquement par au moins un évent de mise à l'air libre avec l'extérieur du corps de jante.

La galerie périphérique de mise à l'air libre s'étend sur au moins 45 degrés d'angle autour de l'axe de révolution, de préférence sur au moins 90 degrés d'angle autour de l'axe de révolution, de préférence sur au moins 180 degrés d'angle autour de l'axe de révolution, plus préférentiellement sur 360 degrés d'angle autour de l'axe de révolution.

L'évent de mise à l'air libre débouche sous la forme d'un trou dans une paroi du corps de jante.

L'évent de mise à l'air libre peut comporter une valve anti retour.

L'âme peut comporter un évidement pour le passage d'une valve de gonflage du bandage pneumatique, et l'évent de mise à l'air libre peut être agencé sur la jante diamétralement à l'opposé dudit évidement.

Le corps de jante peut être réalisé en matériau composite.

L'invention concerne aussi une roue pour cycle, caractérisée en ce qu'elle comporte une jante ayant l'une quelconque des caractéristiques précédentes.

Une telle roue peut être une roue disque dans laquelle la jante est reliée à un moyeu central par deux flasques surfaciques, une roue à bâtons dans laquelle la jante est reliée à un moyeu central par une série de bâtons séparés les uns des autres, les bâtons étant réalisés en une seule pièce avec la jante, ou encore une roue à rayons dans laquelle la jante est reliée à un moyeu central par une série de rayons qui sont fixés chacun d'une part sur la jante et d'autre part sur le moyeu, les rayons pouvant être chacun tendus entre le moyeu et la jante.

L'invention concerne aussi un ensemble de roulage comportant une roue et un bandage pneumatique monté dans la gorge d'accueil de la jante, le bandage pneumatique pouvant être un pneumatique à section ouverte qui est monté sur la jante sans chambre à air.

### Brève description des dessins

**[****Fig. 1****]** La figure **1** est une vue en plan d'une roue de cycle.
**[****Fig. 2****]** La figure **2** représente un premier mode de réalisation de l'invention en perspective avec une section par un plan radial contenant l'axe de révolution **A1,** la section étant effectuée dans un plan radial passant par un puits de valve.
**[****Fig. 3****]** La figure **3** est une vue similaire à celle de la **Fig. 2****,** la section étant effectuée dans un plan radial passant par un puits de rayon.
**[****Fig. 4****]** La figure **4** est une vue similaire à celle de la **Fig. 2****,** la section étant effectuée dans un plan radial passant par une valve de mise à l'air libre.
**[****Fig. 5****]** La figure **5** illustre le même mode de réalisation de l'invention, en perspective avec une section par un plan médian de la roue, perpendiculaire à l'axe de révolution, la **Fig.** 5 illustrant un secteur de la roue comprenant la valve de gonflage.
**[****Fig. 6****]** La figure **6** est une vue similaire à celle de la **Fig. 5****,** illustrant un secteur de la roue comprenant la valve de mise à l'air libre.
**[****Fig. 7****]** La figure **7** représente un deuxième mode de réalisation de l'invention en perspective avec une section par un plan radial contenant l'axe de révolution **A1.**
**[****Fig. 8****]** La figure **8** est une vue similaire à celle de la **Fig. 7****,** représentant un troisième mode de réalisation de l'invention.
**[****Fig. 9****]** La figure **9** est une vue similaire à celle de la **Fig. 7****,** représentant un quatrième mode de réalisation de l'invention.
**[****Fig. 10****]** La figure **10** est une vue similaire à celle de la **Fig. 7****,** représentant un cinquième mode de réalisation de l'invention, la section étant effectuée dans un plan radial passant par un puits de valve.
**[****Fig. 11****]** La figure **11** est une vue similaire à celle de la **Fig. 7****,** représentant un sixième mode de réalisation de l'invention.
**[****Fig. 12****]** La figure **12** est une vue similaire à celle de la **Fig. 7****,** représentant un septième mode de réalisation de l'invention.
**[****Fig. 13****]** La figure **13** est une vue similaire à celle de la **Fig. 7****,** représentant le septième mode de réalisation de l'invention, la section étant effectuée dans un plan radial passant par un évent de mise à l'air libre.

### Description de certains modes de réalisation

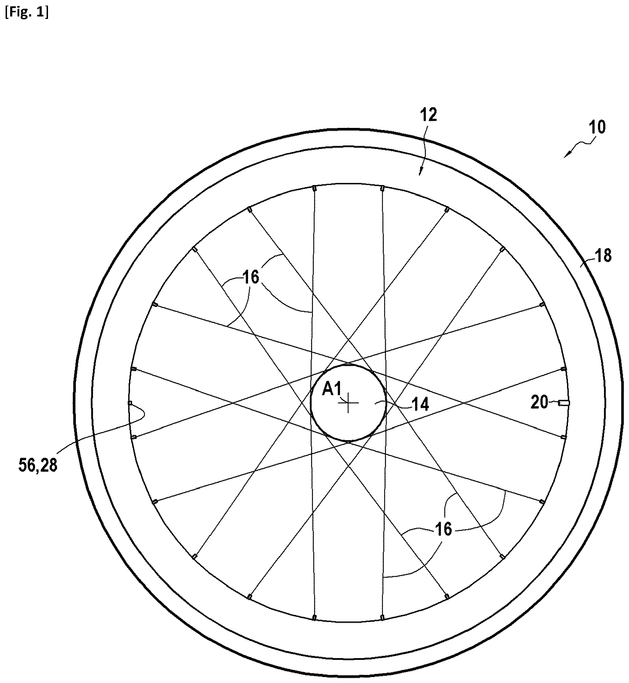

On a illustré sur la **Fig. 1** une roue de cycle **10** comportant une jante **12** et moyeu **14.** Le moyeu **14** est destiné à permettre le montage de la roue **10** sur un cadre d'un cycle (non représenté), de telle sorte que la roue puisse tourner par rapport au cadre du cycle autour d'un axe de révolution **A1.**

La jante **12** est reliée au moyeu, dans l'exemple de réalisation, par des rayons **16.** Chaque rayon **16** est fixé d'une part sur le moyeu **14,** et d'autre part sur la jante **12.** Dans les exemples qui vont être décrits, les rayons **16** sont des rayons tendus qui sont accrochés à la jante **12** et au moyeu **14** et qui sont chacun tendus entre la jante **12** et le moyeu **14.**

La roue **10** est destinée à porter un bandage pneumatique **18** pour former un ensemble de roulage. Pour cela, la jante **12** porte un bandage pneumatique **18** dont la surface périphérique externe forme la surface de roulement de l'ensemble de roulage. Sur cette **Fig. 1****,** on a aussi illustré une valve de gonflage **20** qui traverse radialement la jante **12** de manière à présenter une extrémité radiale interne à laquelle peut être raccordé un appareil de gonflage et dont l'extrémité radiale externe débouche dans une chambre de gonflage du bandage pneumatique **18.**

Le bandage pneumatique pourrait être un boyau mais, dans l'exemple illustré, il s'agit d'un pneumatique à section ouverte qui est reçu dans une gorge d'accueil **22** de la jante **12.** Il sera détaillé plus loin que, dans l'exemple illustré, le pneumatique est monté sans chambre à air, dans un montage « tubeless ».

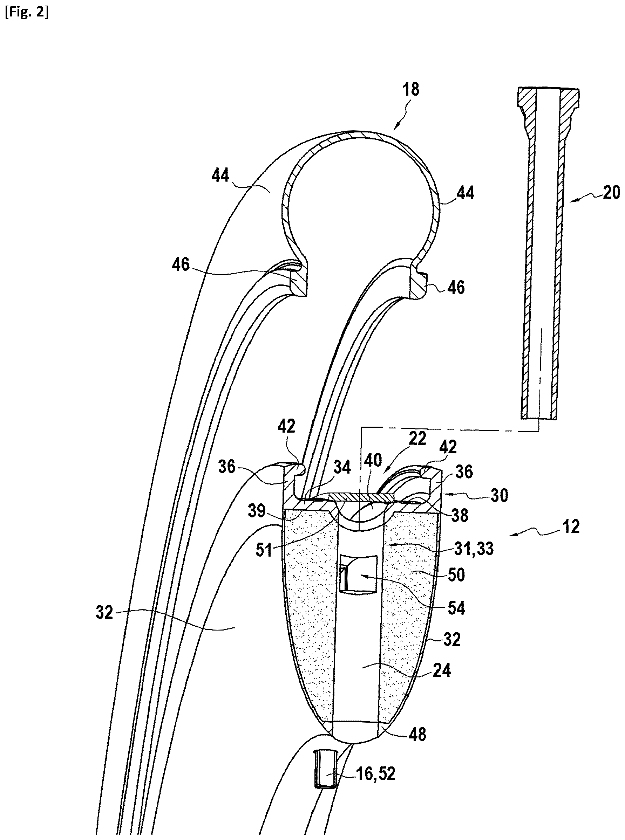

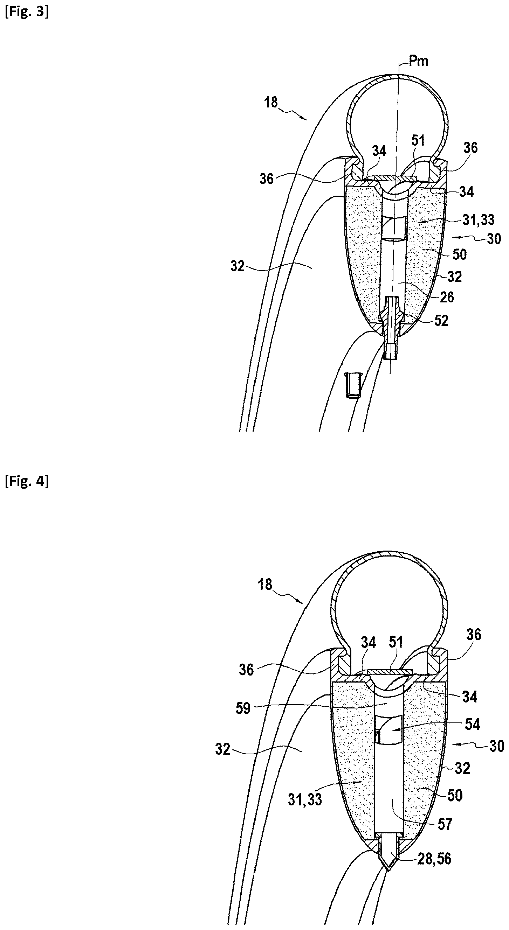

On a illustré sur les **Figs. 2****,** **3,** et **4** trois vues qui illustrent un premier mode de réalisation de l'invention en perspective avec une section par un plan radial contenant l'axe de révolution **A1,** les trois sections étant effectuées respectivement dans trois plans radiaux différents, celui de la **Fig. 2** passant par un puits de valve **24,** celui de la **Fig. 3** passant par un puits de rayon **26** et celui de la **Fig. 4** passant par une valve de mise à l'air libre **28.**

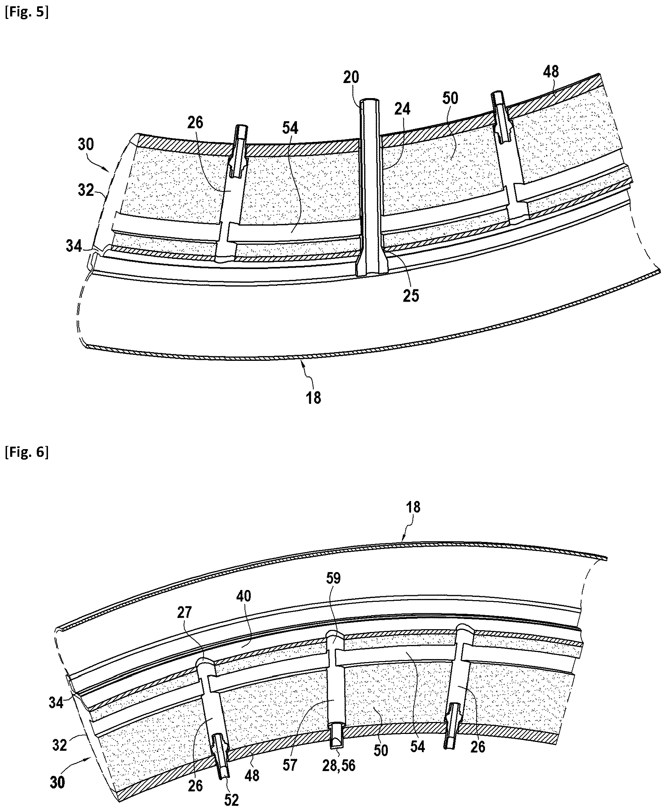

On a illustré sur les **Figs. 5** et **6** deux vues qui illustrent le même mode de réalisation de l'invention, en perspective avec une section par un plan médian **Pm** de la roue **10,** perpendiculaire à l'axe de révolution **A1.** La trace de ce plan médian **Pm** est illustrée sur la **Fig. 3****.** La **Fig. 5** illustre un secteur de la roue comprenant la valve de gonflage **20.** La **Fig. 6** illustre un secteur de la roue comprenant la valve de mise à l'air libre **28.**

Sur ces figures, on voit que la jante **12** comporte un corps de jante **30** qui est un solide de révolution autour de l'axe de révolution **A1** et qui comprend deux parois latérales **32** et un pont transversal externe **34** qui relie les deux parois latérales **32.** Le corps de jante **30** peut être, comme dans les exemples illustrés, symétrique par rapport au plan médian **Pm,** perpendiculaire à l'axe de révolution **A1.** Cependant, le corps de jante pourrait aussi être asymétrique par rapport au plan médian **Pm.** Dans les exemples illustrés où la jante est une jante de roue à rayons, le corps de jante **30** est un corps annulaire autour de l'axe de révolution **A1.**

Les deux parois latérales **32** du corps de jante ont chacune une portion radiale externe **36** qui s'étend radialement vers l'extérieur par rapport à l'axe de révolution **A1** et par rapport au pont transversal externe **34** de sorte que les portions radiales externes **36** et le pont transversal externe **34** délimitent une gorge d'accueil **22** qui est ouverte radialement vers l'extérieur du corps de jante **30** et qui est destinée à accueillir le bandage pneumatique **18,** lequel est destiné à être gonflé par une pression gazeuse.

Dans l'exemple, le pont transversal externe **34** présente, selon la direction de l'axe de révolution **A1,** deux portions latérales d'extrémités parallèles à l'axe **A1,** et une portion centrale qui est bombée radialement vers l'intérieur. Ainsi, la face externe **38** du pont transversal externe **34,** qui est tournée radialement vers l'extérieur vers la gorge d'accueil **22,** présente une rainure centrale **40** dont la direction d'extension s'étend selon la direction périphérique autour de l'axe de révolution **A1.** Les portions radiales externes **36** des parois latérales **32** s'étendent donc depuis les extrémités latérales des portions latérales d'extrémité du pont transversal externe **34,** radialement vers l'extérieur. Dans de nombreux cas, les extrémités radiales externes de ces deux portions radiales externes **36** présentent chacune un retour transversal **42** orienté selon la direction de l'axe de révolution **A1,** chacun en direction l'un de l'autre vers le plan médian **Pm** de la roue. Les retours transversaux **42** forment donc deux crochets. Cependant, l'invention peut aussi être mise en œuvre sans la présence de tels crochets.

Dans l'exemple illustré, le bandage pneumatique est un pneumatique **18** à section ouverte qui présente de manière connue des flancs latéraux **44** dont l'extrémité radiale interne forme un talon **46** qui est de forme complémentaire du crochet formé par les portions radiales externes **36** des parois latérales **32** du corps de jante **30.** Sous l'effet de la pression gazeuse de gonflage dans le pneumatique **18,** les talons **46** sont emboîtés dans les crochets formés par les portions radiales externes **36** de parois latérales **32** du corps de jante **30.** On constate donc que la gorge d'accueil **22** est soumise aux forces de pression imposées par la pression gazeuse dans le bandage pneumatique.

Le pneumatique **18** peut être monté avec la présence d'une chambre à air. Dans un tel cas, la chambre à air vient donc emplir le volume toroïdal délimité par la coopération de la gorge d'accueil du corps de jante et par le bandage pneumatique. Le pneumatique **18** peut être monté sans la présence d'une chambre à air. On parle alors d'un montage « tubeless », c'est-à-dire sans chambre à air. Dans un tel cas, le gaz sous pression emplit le volume toroïdal délimité par la coopération de la gorge d'accueil **12** du corps de jante **30** et par le bandage pneumatique **18.**

Les deux parois latérales **32** du corps de jante **30** sont réunies à leur extrémité radiale interne par une portion radiale interne **48** du corps de jante **30.** En section par un plan radial contenant l'axe de révolution **A1,** le corps de jante **30** peut présenter différents profils, en fonction notamment de la géométrie des parois latérales **32.** Dans certaines géométries, les parois latérales **32** sont parallèles ou quasi parallèles entre elles, donc rigoureusement perpendiculaire ou quasi rigoureusement perpendiculaire à l'axe de révolution **A1.** Dans ce cas, elles sont réunies à leur extrémité radiale interne par une portion radiale interne du corps de jante qui se présente sous la forme d'un pont transversal interne. Dans d'autres géométries, les parois latérales sont inclinées l'une par rapport à l'autre pour former une géométrie en V ou en U dans un plan radial contenant l'axe de révolution. Dans ce cas, elles sont réunies à leur extrémité radiale interne par une portion radiale interne du corps de jante qui se présente sous la forme d'une portion de raccordement. Dans l'exemple illustré, les parois latérales **32** ont un profil courbé dans un plan radial contenant l'axe de révolution **A1** de manière à former une géométrie en U pour le corps de jante **30** dans ce plan. Ainsi, dans cet exemple, la portion radiale interne **48** du corps de jante **30** qui réunit les deux parois latérales **32** se présente sous la forme d'une portion de raccordement dans la continuité des parois latérales **32** recourbées. D'autres géométries sont possibles, comme des géométries en V ou des géométries dans lesquelles la portion radiale interne du corps de jante, qui réunit les extrémités radiales internes des parois latérales **32,** présente une extension transversale parallèle à l'axe de révolution **A1.**

Le corps de jante **30** pourrait être réalisé en matériau métallique, notamment en alliage d'aluminium. Cependant, le corps de jante est de préférence réalisé en matériau composite. Parmi les matériaux composites, il est courant de mettre en œuvre, dans les roues de cycle à hautes performances, pour la réalisation du corps de jante, des matériaux composites associant des fibres de renfort, par exemple des fibres de verre, des fibres de carbone, et/ou des fibres de polyaramide, noyées dans une matrice de résine polymère, thermoplastique ou thermodurcissable, par exemple une résine à base de polyester, ou une résine à base de polyuréthane ou une résine à base d'époxy. Les fibres de renfort peuvent êtres des fibres courtes noyées dans la matrice avec une orientation aléatoire. Cependant, le corps de jante **30** est de préférence réalisé en matériau composite comportant des fibres de renfort sous forme de nappes de fibres longues orientées. Les nappes de fibres longues orientées peuvent être des nappes unidirectionnelles, ou des tissus de fils tissés, avec des fils de renfort qui s'étendent selon au moins deux directions non-parallèles et qui sont tissés entre eux. Le corps de jante **30** en matériau composite peut comporter plusieurs nappes de fibres longues orientées superposées, les nappes superposées pouvant être de types différents, avec ainsi la possibilité de superposer plusieurs tissus identiques ou différents, tant dans la composition des fils que dans leur orientation ou leur tissage, et/ou des nappes unidirectionnelles avec des orientations de fibres identiques ou différentes, et avec des compositions de fibres identiques ou différentes. De même, différentes parties du corps de jante peuvent présenter des superpositions différentes de nappes de fibres.

Les deux parois latérales **32** du corps de jante **30** délimitent, avec la portion radiale interne **48** du corps de jante **30** et avec le pont transversal externe **34,** un espace intérieur **31** qui est fermé par les deux parois latérales **32** et par le pont transversal externe **34.** On note que le pont transversal externe **34** sépare la gorge d'accueil du bandage pneumatique **18** par rapport à l'espace intérieur **31** du corps de jante **30.** Cet espace intérieur **31** est agencé radialement vers l'intérieur par rapport au pont transversal externe **34.** Le corps de jante **30** étant une structure de révolution autour de l'axe de révolution, formée des deux parois latérales réunies à leur extrémité radiale interne et du pont transversal externe, il constitue une structure creuse de profil fermé, qui donne sa rigidité au corps de jante, et qui délimitent donc cet espace intérieur **31** qui est lui aussi un volume de révolution autour de l'axe de révolution **A1.** De préférence, le corps de jante **30** est réalisé en une seule pièce.

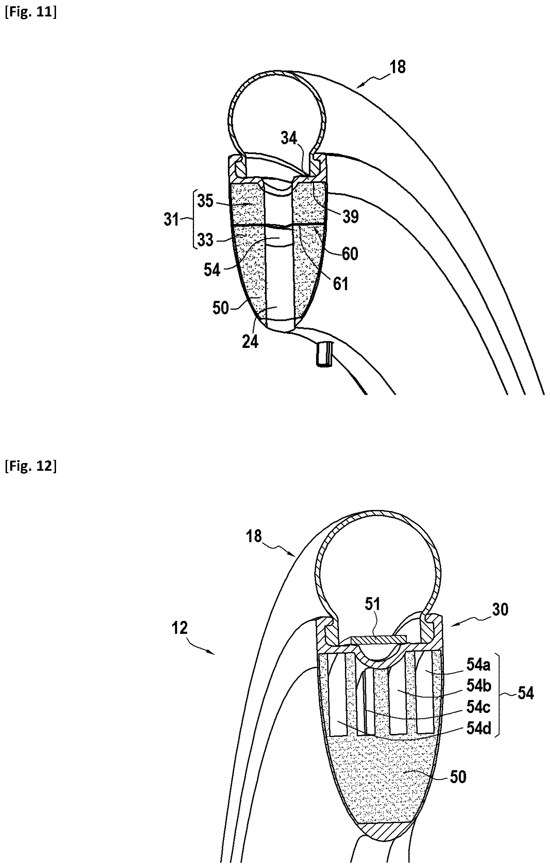

L'espace intérieur **31** délimité par le corps de jante **30** peut former un compartiment unique, qui peut alors être qualifié de compartiment principal **33,** qui est alors confondu avec l'espace intérieur **31,** ou peut être subdivisé en au moins deux compartiments, dont un compartiment principal **33** et au moins un compartiment secondaire **35.** Comme on le verra dans l'exemple décrit plus loin en référence à la **Fig. 11****,** on peut par exemple avoir, radialement entre le pont transversal externe **34** et la portion radiale interne **48** de jonction des parois latérales **32,** au moins un pont transversal intermédiaire qui subdivise cet espace intérieur **31** en deux compartiments, respectivement interne et externe. Par ailleurs, dans certaines constructions, l'espace intérieur **31** peut comporter une ou plusieurs cloisons orientées de manière générale dans un plan sensiblement perpendiculaires à l'axe de révolution **A1,** subdivisant l'espace intérieur en au moins deux compartiments latéraux, voir en un compartiment central bordé de chaque côté, selon la direction de l'axe de révolution **A1,** d'un compartiment latéral.

L'espace intérieur **31** du corps de jante **30** comporte au moins un compartiment principal **33** qui est empli d'une âme **50** en matériau(x) de remplissage.

L'âme **50** peut être réalisée sous la forme d'un corps unique ou de plusieurs corps distincts. S'il y a plusieurs corps distincts constitutifs de l'âme **50,** des corps peuvent être séparés l'un de l'autre, peuvent être simplement juxtaposés, et/ou peuvent être assemblés, par exemple par collage. L'âme peut être constituée d'un unique matériau de remplissage, ou de plusieurs matériaux de remplissage distincts. Dans les exemples illustrés où la jante est une jante de roue à rayons, l'âme **50** est un corps annulaire autour de l'axe de révolution **A1.**

Un matériau remplissage pour la réalisation de l'âme est un matériau solide, au sens de non gazeux et non liquide. De préférence, le matériau de remplissage est un matériau à faible masse volumique, ayant notamment une masse volumique inférieure à 1000 kilogrammes par mètre cube, de préférence inférieure à 500 kilogrammes par mètre cube, plus préférentiellement inférieure à 100 kilogrammes par mètre cube, mesurée selon la norme ISO 845.

L'âme **50,** ou au moins ses différents corps constitutifs, est imperméable aux gaz, donc imperméable à l'air, au sens que l'air ne peut pas s'infiltrer ni circuler à l'intérieur du volume occupé par l'âme **50.**

Typiquement, l'âme **50** peut être constituée d'un, ou comprendre un matériau de remplissage de type matériau alvéolaire à cellules fermées.

Typiquement, un matériau alvéolaire à cellules fermées peut être une mousse composée de cellules qui délimitent un volume fermé, aussi appelé alvéole, qui est rempli d'un gaz, les cellules étant solidaires les unes des autres. Les cellules sont donc étanches, et les cellules sont liées les unes aux autres de manière à ne pas permettre la circulation de gaz dans le matériau de remplissage. Les cellules sont donc formées d'une paroi cellulaire fermée délimitant le volume fermé de l'alvéole.

Typiquement, un matériau alvéolaire à cellules fermées peut être une mousse en matériau polymère composée de cellules de matériaux polymère qui délimitent un volume fermé.

L'âme **50** peut donc être constituée en tout ou partie d'une mousse de polyuréthane, de polychlorure de vinyle (PVC), de PVC réticulé, de polyétherimide (PEI), de polyméthacrylimide (PMI), de polyéthylène téréphtalate (PET), de polyéthylène (PES), etc...

L'âme **50** peut aussi être constituée en tout ou partie d'une mousse métallique à cellules fermées.

Le matériau alvéolaire à cellules fermées peut être un matériau en nid d'abeille.

Au sens de l'invention, le bois, notamment le bois de balsa peut être considéré comme un matériau alvéolaire à cellules fermées, et peut donc être utilisé pour réaliser tout ou partie de l'âme **50.**

En tant que matériau de remplissage constitutif d'au moins une partie de l'âme **50,** on peut aussi utiliser une mousse syntactique comportant une matrice de résine polymère chargée de particules, par exemple de particules creuses, par exemple chargée de billes creuses, par exemple de billes de verre creuses. Un tel matériau peut aussi être considéré comme un matériau alvéolaire à cellules fermées.

L'âme **50** peut être préfabriquée à sa forme définitive, ou à une forme quasi définitive avant la réalisation du corps de jante **30.** A contrario, l'âme **50** peut être formée en même temps que le corps de jante **32,** par coulage dans l'espace intérieur **31, 33** du corps de jante, par exemple par expansion in situ dans l'espace intérieur **31, 33** du corps de jante **32.** Cela est notamment possible notamment lorsque l'âme **50** est formée ou comprend d'un matériau de remplissage de type mousse polymère.

Le compartiment principal **33** et l'âme **50** peuvent être des volumes de révolution autour de l'axe de révolution **A1.**

De préférence l'âme **50** occupe l'intégralité du volume du compartiment principal **33** de l'espace intérieur **31,** à l'exception des évidements qui forment le puits de valve et des éventuels évidements formant des puits de rayons qui seront décrits ci-après, et, le cas échéant, à l'exception de la ou des galeries de mises à l'air libre selon l'invention, qui vont être décrites ci-après. De préférence, l'âme **50** est donc directement au contact des parois qui délimitent le compartiment principal **33,** notamment directement au contact des parois latérales **32** du corps de jante.

De préférence, l'âme **50** est rigide, de manière à avoir un rôle structurel, au sens d'augmenter de manière significative la résistance du corps de jante **30** aux déformations vis-à-vis des efforts qui sont habituellement appliqués au corps de jante **30** en fonctionnement. Notamment, l'âme **50** vise à limiter le risque de déformation des parois latérales du corps de jante, notamment les risques de déformation par flambement. Ainsi, l'âme présente des propriétés mécaniques qui sont suffisantes pour lui permettre de participer à la résistance du corps de jante **30** dans lequel elle est intégrée. Ainsi, l'âme **50** forme avec le corps de jante **30** une structure sandwich. Dans une structure sandwich, deux peaux externes minces mais rigides, ici notamment les parois **32, 34** du corps de jante **30,** sont associées à une âme interne ayant une moindre masse volumique et une moindre résistance mécanique mais présentant une épaisseur entre deux parois rigides de la structure. L'âme de la structure sandwich empêche notamment un flambement des parois rigides en empêchant que les parois se rapprochent l'une de l'autre, et contribue ainsi au renforcement structure.

De préférence, l'âme **50** adhère aux parois **32, 34** du corps de jante **30** qui délimitent l'espace intérieur **31, 33** qui est empli par l'âme **50,** ce qui améliore le la raideur en flexion.

Dans certains modes de réalisation, l'âme **50** est enfermée dans le compartiment principal **33** de manière qui, par conception, est supposée être étanche. On trouve cette configuration dans certaines roues disques ou dans certaines roues à bâton dans lesquels les bâtons qui relient la jante au moyeu sont réalisés en une seule pièce avec la jante. Dans une roue disque, la jante est reliée à un moyeu par deux flasques surfaciques, les flasques étant sensiblement perpendiculaires à l'axe de révolution pour les roues « paraculaires » ou formant un volume bi-convexe analogue à celui d'une lentille optique dans le cas des roues « lenticulaires ». De préférence, dans une roue disque, la jante, les flasques surfaciques et le moyeu sont réalisés en une seule pièce, de préférence en matériau composite. Dans une roue à bâtons, la jante est reliée à un moyeu central par une série de bâtons séparés les uns des autres, avec des évidements entre les bâtons et les bâtons étant réalisés en une seule pièce avec la jante. De préférence, dans une roue à bâtons, la jante, les bâtons et le moyeu sont réalisés en une seule pièce, de préférence en matériau composite. Dans ces cas où l'âme **50** est enfermée dans le compartiment principal **33** de manière qui, par conception, est supposée être étanche, des défauts d'étanchéité peuvent apparaitre, notamment au niveau du pont transversal externe, et plus notamment au niveau du raccordement du pont transversal externe **34** avec les parois latérales **32** du corps de jante **30.**

Dans une jante selon l'invention il est généralement prévu, dans le corps de jante **30,** un puits de valve **24** pour le passage de la valve de gonflage **20** du bandage pneumatique. Le puits de valve traverse le corps de jante selon une direction sensiblement radiale. Le puits de valve **24** débouche donc à une extrémité radiale externe dans le pont transversal externe **34** au niveau d'un perçage **25** de celui-ci. Le puits de valve **24** débouche à son extrémité radiale interne dans la portion radiale interne **48** du corps de jante **30,** au niveau d'un autre perçage. Le puits de valve **24** implique donc généralement de traverser le compartiment principal **33** de l'espace intérieur **31,** dans lequel on trouve l'âme **50,** ce qui implique l'aménagement d'un évidement dans l'âme **50** correspondant au puits de valve **24.** Bien entendu, dans le cas d'un montage sans chambre à air, la valve est montée dans le puits de valve de telle manière que le gaz sous pression ne puisse, en fonctionnement normal, pas s'échapper vers l'espace intérieur **31** du corps de jante.

Dans les jantes à rayons, les rayons **16** sont fixés à la jante **12** par des moyens de fixation qui sont aménagés dans le corps de jante. En effet, les rayons **16** sont des pièces distinctes du corps de jante **30,** qui sont fabriqués de manière indépendante du corps de jante **30** et qui y sont rapportés au moment de la fabrication de la roue **10.** Dans le cas d'une jante comprenant une âme **50,** les moyens de fixation d'un rayon **16** sont donc reçus dans un évidement qui est aménagé dans le corps de jante, et qui est donc aménagé dans l'âme **50,** cet évidement étant appelé puits de rayons **26.** Dans certains modes de réalisation, les rayons **16** sont fixés à la jante par le moyen d'un collage. Dans ce cas, une extrémité radiale externe du rayon est engagée dans le puits de rayons et y est fixée par collage. De préférence, la colle emplit entièrement le puits de rayons, mais il n'est pas toujours possible de garantir que le puits de rayons est entièrement empli par la colle. Dans l'exemple illustré, les rayons **16** sont fixés à la jante par le moyen d'un écrou de fixation reçu dans le puits de rayons. Cet écrou de fixation vient en appui radialement vers l'intérieur contre une surface supérieure de la portion radiale interne **48** du corps de jante **30.** L'écrou de fixation **52** peut comporter un alésage taraudé dans lequel on peut alors engager une extrémité radiale externe filetée du rayon **16.** On peut encore prévoir d'autres formes de réalisation des moyens de fixation sur la jante. Par exemple, l'extrémité radiale externe du rayon peut comprendre une surface d'appui analogue à une tête de rivet, venant s'engager en appui contre une surface d'appui du corps de jante. Selon un autre exemple, l'extrémité radiale externe du rayon peut comporter un crochet destiné à venir s'accrocher sur un organe fixation solidaire du corps de jante, cet organe de fixation étant au moins en partie reçu dans un évidement aménagé dans l'âme **50** à l'intérieur du corps de jante. Dans l'exemple de réalisation, la jante **12** comporte autant de puits de rayons **26** ce que le nombre de rayons **16.** Dans certains modes de réalisation, un même puits de rayon peut accueillir les moyens de fixation de deux rayons **16.**

Dans tous les cas où l'on trouve un puits de rayon **26** qui traverse l'âme **50** à l'intérieur du corps de jante **30,** le puits de rayons **26** peut déboucher au niveau d'un perçage **27** dans le pont transversal externe **34** du corps de jante. Dans l'exemple, de tels perçages **27** sont aménagés dans la partie centrale du pont transversal externe **34,** ici dans la rainure **40.** La présence d'un tel perçage **27** permet d'accéder au puits de rayon radialement depuis l'extérieur et permet donc, pour l'opération de montage des rayons **16,** d'engager les moyens de fixation du rayon. Dans ce cas, le pont transversal supérieur **34** du corps de jante **30** présente donc des perçages **27** qui permettent d'accéder à des zones de fixation des rayons sur le corps de jante. Dans ce cas, la jante peut comporter un ruban de fond de jante **51** qui est rapporté sur la face externe **38** du pont transversal externe **34,** la face externe **38** étant tournée vers la gorge d'accueil **22.** Le ruban de fond de jante **51** vient former une étanchéité entre l'espace intérieur **31** du corps de jante **30** et la zone sous pression délimitée par le fonds de jante, par la gorge d'accueil, et par le bandage pneumatique. Le ruban de fond de jante **51** se présente généralement sous la forme d'un ruban de matériau qui peut être souple ou rigide. Il peut être réalisé par exemple en matériau polymère de type caoutchouc synthétique. Dans d'autres exemples, il peut être réalisé en matériau polymère rigide. Ce ruban de fond de jante **51** s'étend sur toute la périphérie de la jante, en appui contre le pont transversal externe **34,** de manière à recouvrir de manière étanche les perçages **27** des puits des rayons **26.** Le ruban de fond de jante **51** est généralement collé contre la face externe du pont transversal externe **34.** Dans les figures, le ruban de fond de jante **51** est illustré seulement sur les **Figs. 2****,** **3** et **4** pour ce qui est du premier mode de réalisation des **Figs. 1** à **6****,** et seulement de manière symbolique. En pratique, le ruban de fond de jante peut épouser la forme de la rainure **40** qui est aménagée du côté de la face externe du pont transversal externe **34.**

Dans le premier exemple de réalisation de l'invention illustré sur les **Figs. 1** à **6****,** l'espace intérieur **31** du corps de jante **30** et le compartiment principal **33** sont le même volume, au sens que l'espace intérieur **31** n'est pas subdivisé.

La jante **12** comporte au moins une galerie périphérique de mise à l'air libre **54** qui communique fluidiquement avec le compartiment principal **33** et qui communique fluidiquement, par au moins un évent de mise à l'air libre **56,** avec l'extérieur du corps de jante. L'évent de mise à l'air libre **56** débouche en dehors de la gorge d'accueil **22.**

La communication fluidique entre la galerie périphérique de mise à l'air libre **54** et le compartiment principal **33** peut être assurée de différentes manières en fonction de l'agencement, comme cela sera vu plus loin.

La galerie périphérique de mise à l'air libre **54** est ainsi à même de recueillir d'éventuelles fuites de gaz sous pression en provenance du bandage pneumatique et en direction de l'espace intérieur du corps de jante **12,** et d'évacuer ces fuites vers l'extérieur, au travers de l'évent de mise à l'air libre, en empêchant ou limitant l'apparition de surpression de gaz dans le corps de jante, notamment en empêchant ou limitant l'apparition de surpression de gaz dans l'espace intérieur **31, 33** qui est empli par l'âme **50.**

Avantageusement, la galerie périphérique de mise à l'air libre **54** relie fluidiquement entre eux une pluralité d'évidements formés dans l'espace intérieur **31** du corps de jante, notamment des évidements formés dans le compartiment principal **33** de l'espace intérieur **31,** et tout particulièrement des évidements formés dans l'âme **50.** Notamment, la galerie périphérique de mise à l'air libre **54** relie fluidiquement entre eux une pluralité de puits de rayons **26,** lesquels se trouvent alors tous mis à l'air libre via la même galerie périphérique de mise à l'air libre **54.** De préférence, tous les puits de rayons **26** de la jante **12** sont reliés à une galerie périphérique de mise à l'air libre **54.** Dans les modes de réalisation illustrée, tous les puits de rayons **26** de la jante **12** sont reliés à une même galerie périphérique de mise à l'air libre **54.**

De même, dans les exemples illustrés, la galerie périphérique de mise à l'air libre **54** est de préférence reliée fluidiquement au puits de valve **24** pour mettre le puits de valve **24** en communication avec l'air libre. De préférence, une même galerie périphérique de mise à l'air libre **54** relie fluidiquement à la fois le puits de valve **24** et plusieurs puits de rayons **26,** de préférence tous les puits de rayons **26,** à l'air libre. De préférence, une unique galerie périphérique de mise à l'air libre **54** relie fluidiquement à la fois le puits de valve **24** et plusieurs puits de rayons **26,** de préférence tous les puits de rayons **26,** à l'air libre, par l'intermédiaire d'un unique évent de mise à l'air libre.

Une galerie périphérique de mise à l'air libre **54** au sens de l'invention s'étend sur au moins **45** degrés d'angle autour de l'axe de révolution **A1,** de préférence sur au moins **90** degrés d'angle autour de l'axe de révolution **A1,** de préférence sur au moins **180** degrés d'angle autour de l'axe de révolution **A1,** par exemple sur 360 degrés d'angle autour de l'axe de révolution. Dans une variante, la galerie de mise à l'air libre **54** au sens de l'invention s'étend, autour de l'axe de révolution **A1,** sur 360 degrés d'angle moins l'écartement angulaire entre deux puits de rayons **26** consécutifs, ou sur 360 degrés d'angle moins l'écartement angulaire entre un puits de valve **24** et un puits de rayon **26** immédiatement adjacent à ce puits de valve **24.** De la sorte, la galerie périphérique de mise à l'air libre **54** est susceptible de mettre en communication fluidique une grande partie, voire l'ensemble du compartiment principal **33** de l'espace intérieur **31** du corps de jante **30,** sur toute son étendue angulaire autour de l'axe de révolution **A1,** avec l'air ambiant. Ceci permet, grâce à une même galerie périphérique de mise à l'air libre, de parer à des fuites de pression gazeuse susceptibles de survenir sur une grande partie, voire l'intégralité, de l'étendue angulaire de la jante **12** autour de l'axe de révolution **A1.** On note que, comme cela sera décrit plus en détail plus loin, une même galerie périphérique de mise à l'air libre **54** peut être constituée de plusieurs tronçons reliés fluidiquement entre eux. Dans ce cas, un ou plusieurs tronçons de galerie peuvent alors s'étendre sur moins de **45** degrés d'angle, ou moins de **90** degrés d'angle, ou moins de **180** degrés autour de l'axe de révolution **A1.** Un ou plusieurs tronçons de galerie peuvent alors s'étendre sur l'écartement angulaire entre deux puits de rayons **26** consécutifs, en reliant fluidiquement ces deux puits de rayons **26** consécutifs, ou sur l'écartement angulaire entre un puits de valve **24** et un puits de rayon **26** immédiatement adjacent à ce puits de valve **24,** en reliant fluidiquement ce puits de rayon **26** à ce puits de valve **24.** Cela n'empêchera pas la galerie périphérique de mise à l'air libre **54,** constituée de ces tronçons qui communiquent fluidiquement entre eux, de s'étendre sur au moins 45 degrés d'angle, de préférence sur au moins 90 degrés d'angle, de préférence sur au moins 180 degrés d'angle autour de l'axe de révolution **A1** et par exemple sur 360 degrés d'angle autour de l'axe de révolution **A1.**

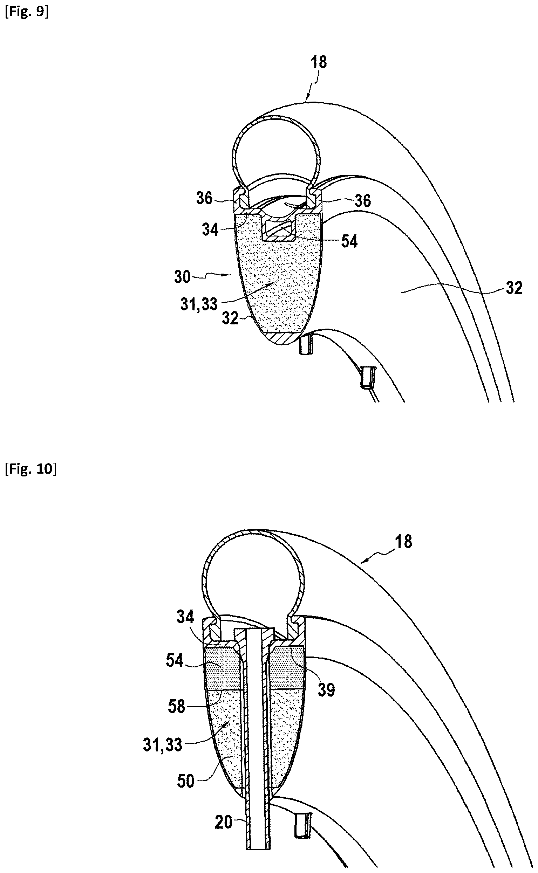

Dans la plupart des exemples illustrés, la galerie périphérique de mise à l'air libre **54** est une galerie creuse, donc vide. Cependant, comme cela est illustré pour le mode de réalisation de la **Fig. 10****,** la galerie périphérique de mise à l'air libre **54** peut être une galerie au moins partiellement emplie d'un matériau perméable aux gaz. En effet, cette galerie est destinée à permettre la circulation d'un gaz sous pression de manière à évacuer tout ou partie d'une surpression gazeuse présente dans la galerie et dans les parties du compartiment principal **33** auquel elle est reliée fluidiquement. Or, avec un matériau perméable aux gaz, la circulation du gaz est donc possible dans le matériau. Le matériau en luimême est donc susceptible de former la galerie mise à l'air libre. Un matériau perméable aux gaz, susceptible d'être utilisé pour former la galerie de mise à l'air libre **54** est par exemple un matériau alvéolaire à cellules ouvertes, par exemple une mousse polymère à cellules ouvertes. D'autres matériaux perméables aux gaz, peuvent être constitué de fibres sèches, par exemple sous la forme d'une corde de fibres sèches, par exemple tressée, ou encore sous la forme de fibres sèches en vrac, les fibres pouvant être de fibres naturelles (coton, lin, ...), des fibres minérales (fibres de verre, ..), des fibres polymères synthétiques, des fibres de carbone, etc.... La galerie périphérique de mise à l'air libre **54** peut être formée d'une structure poreuse aux gaz, par exemple en forme de treillis. La galerie périphérique de mise à l'air libre **54** peut ainsi être réalisée sous la forme d'une structure poreuse en treillis par impression **3**D.

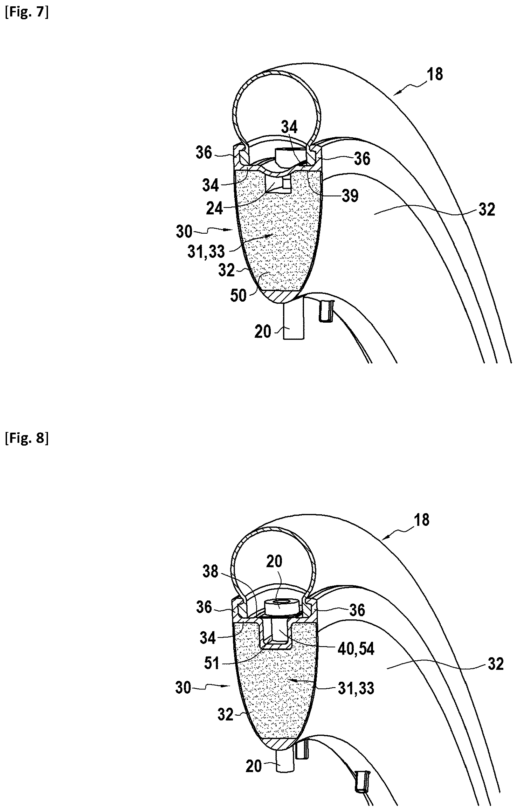

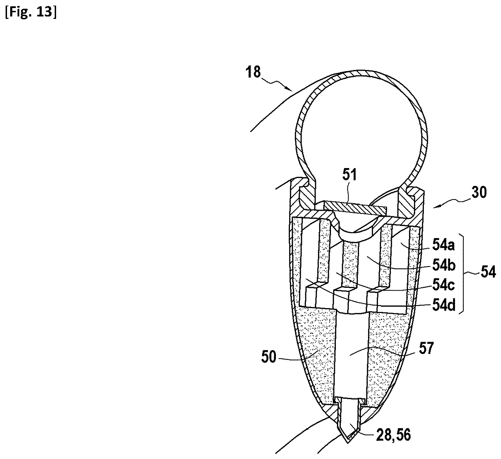

Dans la plupart des exemples de réalisation, la galerie périphérique de mise à l'air libre **54** est aménagée dans l'espace intérieur **31** tel que défini plus haut et, de préférence dans le compartiment principal **33** qui est empli de l'âme **50** en matériau de remplissage. Dans ce cas, la galerie périphérique de mise à l'air libre **54** est avantageusement aménagée dans l'âme **50** en matériau alvéolaire à cellules fermées qui emplit le compartiment principal **33** du corps de jante, ce qui est illustré dans le premier exemple de réalisation des **Figs. 1** à **6****,** ou encore dans le mode de réalisation de la **Fig. 11** ou encore dans le mode de réalisation illustrée aux **Figs. 12** et **13****.** Dans ces modes de réalisation, la galerie périphérique de mise à l'air libre **54** est une galerie creuse formée par un évidement dans l'âme en matériau alvéolaire à cellules fermées qui emplit compartiment principal **33** du corps de jante. Dans ces exemples, mais aussi dans ceux des **Fig. 7** et **10****,** la communication fluidique entre la galerie périphérique de mise à l'air libre **54** et le compartiment principal **33** est assurée par la simple présence de la galerie périphérique de mise à l'air libre **54** dans le compartiment principal **33.**

Dans les exemples illustrés, la galerie périphérique de mise à l'air libre **54** présente donc la géométrie d'un tube qui s'étend autour de l'axe **A1.** Le tube peut avoir une section, dans un plan radial contenant l'axe de révolution **A1,** circulaire ou prismatique, par exemple une section rectangulaire dans les exemples illustrés.

Dans les exemples illustrés, la galerie périphérique de mise à l'air libre **54** s'étend donc en suivant une ligne d'extension continue, qui forme un cercle à 360° dans un plan perpendiculaire à l'axe de révolution **A1.** Cependant, la galerie périphérique pourrait s'étendre suivant une ligne d'extension présentant des décrochements, à condition toutefois qu'il y ait continuité de communication fluidique tout au long de la galerie périphérique de mise à l'air libre **54.** On pourrait ainsi avoir une galerie périphérique de mise à l'air libre présentant plusieurs tronçons, chaque tronçon s'étendant en suivant une ligne d'extension continue formant un arc de cercle dans un plan perpendiculaire à l'axe de révolution **A1,** les différents tronçons étant reliés deux à deux par des tronçons de communication de manière à assurer la continuité de communication fluidique tout au long de la galerie périphérique de mise à l'air libre.

Dans l'exemple illustré, la galerie périphérique de mise à l'air libre **54** est symétrique par rapport au plan médian **Pm** du corps de jante **30** perpendiculaire à l'axe de révolution **A1.** Dans l'exemple, dans chaque plan radial contenant l'axe de révolution **A1,** le centre de la section de la galerie périphérique de mise à l'air libre **54** est donc situé dans le plan médian **Pm** de la jante **12,** perpendiculaire à l'axe de révolution **A1.** Ainsi, de préférence, la galerie périphérique de mise à l'air libre **54** est agencée centralement dans le corps de jante **12** selon la direction de l'axe de révolution **A1.**

Bien entendu, le fait d'agencer la galerie périphérique de mise à l'air libre **54** centralement dans le corps de jante **12** selon la direction de l'axe de révolution **A1** permet de s'assurer que cette galerie intercepte les puits de rayons **26** et le puits de valve **24** qui sont généralement réalisés chacun sous la forme d'évidement cylindrique présentant un axe d'orientation radiale par rapport à l'axe de révolution **A1,** cet axe d'orientation radiale étant contenu dans le plan médian **Pm** du corps de jante **30.** Cela est particulièrement visible sur les **Figs. 2** à **5****.**

Cependant, on pourrait prévoir que la galerie périphérique soit décalée selon la direction de l'axe de révolution **A1** par rapport à ce plan médian **Pm** de la jante. Toutefois, cette possibilité est de préférence réservée à un mode de réalisation comportant au moins deux galeries périphériques de mise à l'air libre disjointes, ou deux tronçons d'une même galerie de mise à l'air libre, qui seraient dans ce cas de préférence agencé(e)s de manière symétrique par rapport au plan médian **Pm,** ceci à fin de préserver l'équilibre dynamique de la jante **12.**

En effet, bien que les exemples illustrés ne présentent qu'une unique galerie périphérique de mise à l'air libre **54,** avec un seul tronçon continu sur toute l'étendue angulaire à 360 degrés d'angle de la galerie autour de l'axe de révolution **A1,** il est possible de prévoir que la jante **12** soit munie de plusieurs galeries périphériques de mise à l'air libre, chaque galerie périphérique de mise à l'air libre étant fluidiquement isolée des autres galeries périphériques de mise à l'air libre, et étant munie de son propre évent de mise à l'air libre pour communiquer fluidiquement avec l'extérieur du corps de jante, en dehors de la gorge d'accueil **22.** Il est encore possible qu'une galerie périphérique de mise à l'air libre comporte plusieurs tronçons reliés fluidiquement entre eux et donc reliés à un ou plusieurs évents de mise à l'air libre communs.

Deux galeries périphériques de mise à l'air libre distinctes, ou deux tronçons d'une même galerie périphérique, peuvent s'étendre au moins en partie le long d'un secteur angulaire commun autour de l'axe de révolution **A1.**

Dans l'hypothèse de la présence de plusieurs galeries périphériques de mise à l'air libre distinctes, ou de plusieurs tronçons d'une même galerie périphérique de mise à l'air libre, on pourrait avoir des galeries périphériques de mise à l'air libre ou des tronçons distincts d'une même galerie périphérique de mise à l'air libre, qui s'étendent selon des secteurs angulaires au moins partiellement disjoints autour de l'axe de révolution **A1,** voir selon des secteurs angulaires entièrement disjoints autour de l'axe de révolution **A1.** On pourrait avoir des galeries périphériques de mise à l'air libre qui s'étendent selon des secteurs angulaires entièrement disjoints, et qui s'étendraient dans l'alignement l'une de l'autre selon la direction périphérique autour de l'axe de révolution **A1.** On pourrait avoir des galeries périphériques de mise à l'air libre, ou des tronçons d'une même galerie périphérique, qui s'étendent sur des secteurs angulaires conjoints ou partiellement conjoints autour de l'axe de révolution **A1,** auquel cas les galeries périphériques de mise à l'air libre distinctes, ou les tronçons distincts d'une même galerie périphérique de mise à l'air libre, s'étendraient de préférence parallèlement l'un(e) à l'autre en étant décalé(e)s l'un(e) de l'autre dans un plan radial contenant l'axe de révolution **A1,** au moins sur les secteurs angulaires dans lesquels elles ou ils s'étendent conjointement.

On a vu qu'une galerie périphérique de mise à l'air libre **54** comporte au minimum un évent de mise à l'air libre **56.** De préférence, une galerie périphérique de mise à l'air libre **54** comporte un unique évent de mise à l'air libre **56.**

Un évent de mise à l'air libre **56** peut être relié à la galerie périphérique de mise à l'air libre **54** par un conduit d'évent **57.** L'évent de mise à l'air libre **56** débouche donc dans une paroi externe du corps de jante **30,** par exemple dans une paroi latérale **32** du corps de jante ou, comme cela est illustré, dans la portion radiale interne **48** du corps de jante **30.** On pourrait prévoir que l'évent de mise à l'air libre débouche par un trou dans la paroi externe du corps de jante. Cependant, il est avantageux de prévoir, comme dans les exemples de réalisation illustrés, que l'évent de mise à l'air libre comporte une valve anti retour **28.** La valve anti retour **28** est prévue pour permettre qu'une surpression gazeuse dans la galerie périphérique de mise à l'air libre soit évacuée au moins en partie vers l'atmosphère à l'extérieur du corps de jante, pour limiter la surpression dans la galerie périphérique de mise à l'air libre. Une valve anti retour **28** peut engendrer une surpression résiduelle dans la galerie périphérique de mise à l'air libre **54.** De préférence, une telle surpression résiduelle est inférieure à 1 bar au-dessus de la pression atmosphérique, de préférence inférieure à 0,5 bar au-dessus de la pression atmosphérique. Par exemple, la surpression résiduelle est inférieure ou égale à 0,1 bar au-dessus de la pression atmosphérique. La présence d'une valve anti retour permet notamment d'éviter ou de limiter l'intrusion d'eau ou d'autres matières indésirables dans l'espace intérieur **31** du corps de jante par le biais de l'évent de mise à l'air libre **56.** Dans l'exemple, la valve anti retour **28** est disposée au niveau du débouché de l'évent de mise à l'air libre **56** dans la paroi externe du corps de jante. La valve anti retour **28** est par exemple réalisée sous la forme d'une valve à fente en matériau élastomère. La valve pourrait aussi être une valve à bille anti-retour, éventuellement muni d'un organe élastique de rappel de la bille en position de fermeture.

Dans l'exemple tel qu'illustré aux **Figs. 4** et **6****,** on voit que l'évent **56** est formé à une extrémité radiale interne d'un conduit d'évent **57** qui communique fluidiquement avec la galerie de mise à l'air libre **54.** Dans ce mode de réalisation, le conduit d'évent **57** débouche aussi, par une extrémité radiale externe **59,** au travers d'un perçage dans le pont transversal externe **34,** dans la gorge d'accueil **12.** Cependant, cette disposition constructive s'explique surtout pour des questions de fabrication, car le conduit d'évent **57** peut alors être réalisé de manière similaire à un puits de valve **24** ou à un puits de rayon **26,** notamment par perçage radial du corps de jante **30** et de l'âme **50.** On notera que la présence d'un fond de jante (non illustré sur les **Figs.5** et **6****),** peut être prévue pour, en fonctionnement, en l'absence de fuite, empêcher la communication directe entre l'extrémité radiale externe **59** du conduit d'évent **57** et la gorge d'accueil **12.** Ceci est visible dans la représentation de la **Fig. 13****.**

De préférence, comme on peut le voir sur la **Fig. 1****,** et notamment lorsqu'il comporte une valve anti retour **28,** l'évent de mise à l'air libre **56** est agencé sur la jante **12** diamétralement à l'opposé du puits de valve **24.** Une telle disposition permet de répartir le poids de la valve anti retour **28** et celui de la valve de gonflage **20** de manière favorable à l'inertie dynamique de la roue **10.**

Plus particulièrement, et avantageusement, la galerie périphérique de mise à l'air libre **54** du premier exemple de réalisation des **Figs. 1** à **6** est aménagée dans l'âme **50** en matériau alvéolaire à cellules fermées qui emplit le compartiment principal **33** du corps de jante **30,** à distance des parois qui délimitent l'espace intérieur **31,** donc à distance des parois latérales **32** mais aussi de préférence à distance du pont transversal externe **34.** Cette disposition est avantageuse dans la mesure où cela évite de créer, au contact d'une de ces parois qui délimitent l'espace intérieur **31,** une zone creuse dépourvue de l'âme **50,** et donc dépourvue du renfort structurel fourni par l'âme **50.**

Cela est encore plus avantageux dans le cas où le corps de jante est réalisé par moulage au contact de l'âme **50.** On a vu en effet que le corps de jante peut par exemple être réalisé en matériau composite comportant des fibres de renfort sous la forme de nappes fibreuses enrobées dans une matrice de résine polymère. Typiquement, le corps de jante **30** peut alors être réalisé en drapant les nappes fibreuses, éventuellement pré-imprégnées de résine, autour de l'âme **50,** puis en faisant polymériser la résine imprégnant les nappes fibreuses dans un moule qui définit la forme extérieure du corps de jante. Dans ce cas, l'âme **50** fournit le support nécessaire aux nappes fibreuses avant que la résine ne soit polymérisée et donc rigidifiée. L'absence de zones vides, qui pourraient être créés par une galerie creuse au contact d'une paroi externe du corps de jante **30,** est alors favorable à l'obtention d'une bonne géométrie de ces parois. On note par ailleurs que dans un tel mode de fabrication, dans lequel la polymérisation de la résine dans le moule peut se faire en étant accompagnée d'une hausse de température, l'âme **50** peut par ailleurs être choisie pour présenter une expansion sous l'effet de cette température, expansion qui est favorable à un bon placage des parois externes du corps de jante **30** contre le moule de polymérisation. Dans ce cas aussi, l'absence de zone vide au contact de ces parois favorisera l'obtention d'une bonne géométrie de ces parois.

Cependant, comme cela est illustré par exemple sur la **Fig. 7****,** la galerie périphérique de mise à l'air libre **54** peut être aménagée au contact d'une des parois qui délimitent l'espace intérieur **31,** voire d'une des parois qui délimitent le compartiment principal **33** qui est empli de l'âme **50** en matériau alvéolaires à cellules fermées. Dans l'exemple de la **Fig. 7****,** la galerie périphérique de mise à l'air libre **54** est aménagée au contact de la face interne **39** du pont transversal externe **34,** face interne **39** qui est tournée vers l'espace intérieur **31.** Avec cette disposition, on remarque que la galerie périphérique de mise à l'air libre **54** est directement en communication avec les perçages **27** par lesquels débouchent les puits de rayons **26** dans la gorge d'accueil **22,** et directement en communication avec le perçage **25** par lequel le puits de valve **24** débouche lui aussi dans la gorge d'accueil **22.** La galerie périphérique de mise à l'air libre **54** est donc directement à même de recueillir toute fuite de gaz au niveau de ces perçages **25, 27.**

À la **Fig. 8****,** on a illustré un exemple de réalisation dans lequel la galerie périphérique de mise à l'air libre **54** est aménagée au moins en partie dans le pont transversal externe **34.** Dans cet exemple, la galerie périphérique de mise à l'air libre est aménagée sur une face externe **38** du pont transversal externe **34,** face externe **38** qui est tournée vers la gorge d'accueil **22,** la galerie périphérique de mise à l'air libre étant dans cet exemple confondue avec la rainure **40** ouverte en direction de la gorge d'accueil **22.** Dans ce mode de réalisation, la jante **12** comporte un ruban de fond de jante **51** qui est rapporté sur la face externe du pont transversal externe **34** et qui referme la rainure **40** de manière étanche par rapport à la gorge d'accueil **22.** En d'autres termes, la galerie périphérique de mise à l'air libre **54** est formée par une géométrie concave du profil de la face externe **38** du pont transversal externe **34,** géométrie qui est refermée par le ruban de fond de gorge **51.** On comprend que la galerie périphérique de mise à l'air libre **54** peut recueillir toute fuite de gaz sous pression susceptible de survenir au niveau du ruban de fond de gorge **51.**

À la **Fig. 9****,** on a illustré un exemple de réalisation dans lequel la galerie périphérique de mise à l'air libre **54** est aménagée intégralement dans le pont transversal externe **34.** Une telle géométrie est particulièrement adaptée à un profil réalisé par extrusion qui permet aisément la réalisation d'une telle galerie qui peut être une galerie creuse, vide. Une telle géométrie est aussi réalisable en prévoyant que la galerie périphérique est remplie d'un matériau perméable aux gaz, par un matériau alvéolaire à cellules ouvertes par exemple. Le pont transversal externe **34** peut être formé en matériau composite avec une ou plusieurs nappes externes de fibres de renfort du côté radial externe du pont transversal externe **34,** et une ou plusieurs nappes internes de fibres de renfort du côté radial interne du pont transversal externe **34.** Un corps en matériau perméable au gaz, ayant la géométrie désirée pour la galerie périphérique de mise à l'air libre **54,** peut être emprisonné entre les nappes internes et externes pour former, après polymérisation de la matrice de résine polymère du matériau composite, la galerie périphérique de mise à l'air libre **54.** Bien entendu, on note encore que, en agençant la galerie de mise à l'air libre **54** centralement selon la direction de l'axe de révolution **A1,** on s'assure que la galerie de mise à l'air libre **54** intercepte à la fois les puits de rayons **26** et le puits de valve **24.**

Dans ces exemples des **Figs. 8** et **9****,** la communication fluidique entre la galerie périphérique de mise à l'air libre **54** et le compartiment principal **33** peut être assurée par la présence de perçages dans le pont transversal externe **34,** ces perçages (non représentés sur les **Figs. 8** et **9****)** pouvant correspondre à un puits de rayon ou à un puits de valve.

Dans l'exemple de la **Fig. 10****,** on a illustré le cas dans lequel l'espace intérieur **31** comporte un unique compartiment, à savoir le compartiment principal **33.** Comme vu plus haut, dans ce mode de réalisation, la galerie périphérique de mise à l'air libre **54** est réalisée sous la forme d'un matériau perméable aux gaz. Ce matériau perméable aux gaz forme un corps de galerie **54** qui est un solide de révolution autour de l'axe de révolution **A1.** Dans cet exemple, le corps de galerie **54** est agencé dans une portion radiale externe du compartiment principal **33** de l'espace intérieur **31.** Dans cet exemple, le corps de galerie **54** est agencé au contact de la face interne **39** du pont transversal externe **34,** face interne **39** qui est donc tournée vers l'espace intérieur **31.** Dans cet exemple, le corps de galerie **54** occupe toute la largeur de l'espace intérieur **31** entre les deux parois latérales **32** selon la direction de l'axe de révolution **A1.** Dans cet exemple, le corps de galerie **54** présente une dimension selon la direction radiale qui est environ d'un tiers de la dimension radiale de la dimension du compartiment principal **33** de l'espace intérieur **31,** donc en l'occurrence d'un tiers de la dimension radiale de l'espace intérieur **31.** Cependant, le corps de galerie pourrait présenter une dimension inférieure, comprise par exemple entre un vingtième et un demi de la dimension du compartiment principal **33** de l'espace intérieur **31.** Dans l'exemple de la **Fig. 10****,** l'âme **50** en matériau alvéolaire à cellules fermées est donc agencée dans une portion radiale interne du compartiment principal **33** de l'espace intérieur **31.** Cependant, une disposition inverse de l'âme **50** et du corps de galerie **54,** avec l'âme **50** disposée radialement à l'extérieur par rapport au corps de galerie **54,** est aussi possible. Dans l'exemple, le corps de galerie **54** et l'âme **50** sont juxtaposés l'un à l'autre au niveau d'une interface **58.** À cette interface **58,** le corps de galerie **54** peut être directement au contact de l'âme **50.** En variante, cette interface **58** peut être formée par une paroi de séparation. Cette paroi de séparation peut par exemple être formée d'une feuille de matériau composite comportant une ou plusieurs nappes fibreuses noyées dans une matrice de résine polymère. Dans l'exemple, cette paroi de séparation n'est pas mécaniquement liée aux parois latérales **32** du corps de jante **30.**

À l'inverse, dans l'exemple de réalisation de la **Fig. 11****,** on voit que le corps de jante **30** comporte un second pont transversal **60** qui relie deux parois latérales **32** du corps de jante **30** et qui est agencé radialement vers l'intérieur par rapport au pont transversal externe **34** de manière à délimiter, dans l'espace intérieur **31,** entre le pont transversal externe **34** et le second pont transversal **60,** un compartiment secondaire **35** distinct du compartiment principal 33. Les deux compartiments sont distincts en ce sens qu'ils sont séparés par une paroi du corps de jante 30. En effet, le second pont transversal **60** est relié mécaniquement aux deux parois latérales **32** du corps de jante **30** de manière à en être solidaire. En revanche, on comprend que le puits de valve **24** ou d'éventuels puits de rayons **26** traverseront le compartiment principal **33** et le compartiment secondaire **35.** De ce fait, la paroi de séparation entre le compartiment principal **33** et le compartiment secondaire **35,** ici le second pont transversal **60,** est percée au niveau de tels évidements.

Le compartiment principal **33** est empli de l'âme **50** en matériau alvéolaire à cellules fermées. Le compartiment secondaire **35** est, dans cet exemple, empli lui aussi d'une âme **50** en matériau alvéolaire à cellules fermées. Dans l'exemple de la **Fig. 11****,** la galerie périphérique de mise à l'air libre **54** est aménagée dans le compartiment principal **33.** Dans le compartiment principal **33,** la galerie périphérique de mise à l'air libre **54** est de préférence disposée à distance des parois latérales **32** du corps de jante **30.** Préférentiellement, elle est disposée centralement dans le corps de jante **30** selon la direction de l'axe de révolution **A1.** Dans cet exemple, la galerie périphérique de mise à l'air libre **54** est agencée au contact de la face interne **61** du second pont transversal **60,** face interne **61** qui est tournée vers le compartiment principal **33.** Avec cette disposition, on retrouve l'avantage déjà discuté en référence au premier mode de réalisation d'avoir disposé la galerie périphérique de mise à l'air libre **54** à distance de toutes les parois externes **32, 34, 48** qui délimitent l'espace intérieur **31** du corps de jante. Cependant, dans une variante de réalisation non représentée, la galerie périphérique de mise à l'air libre **54** pourrait être aménagée dans le compartiment secondaire **35,** entre le pont transversal externe **34** et le second pont transversal **60.** De même, dans une autre variante de réalisation non représentée, le compartiment secondaire **35** pourrait être un espace vide ou au moins partiellement vide, ou encore un espace rempli d'un matériau perméable aux gaz pour former une galerie périphérique de mise à l'air libre **54.**

Sur les **Figs. 12** et **13****,** on a illustré une variante de réalisation dans laquelle la galerie périphérique de mise à l'air libre **54** est formée de plusieurs tronçons de galerie parallèles **54a, 54b, 54c, 54d.** Comme on le voit la **Fig. 13****,** ces tronçons de galerie parallèles **54a, 54b, 54c, 54d** sont reliés fluidiquement entre eux, par au moins un canal transversal **62.** La galerie périphérique de mise à l'air libre **54,** par l'intermédiaire de l'un de ces tronçons de galerie parallèles **54a, 54b, 54c, 54d,** et/ou par l'intermédiaire du canal transversal **62,** est reliée fluidiquement à un évent **56** qui, dans cet exemple, comporte une valve antiretour **28.** Dans l'exemple, les tronçons de galerie parallèle **54a, 54b, 54c, 54d** sont formés par autant d'évidements dans l'âme **50** en matériau alvéolaire à cellules fermées. Ces évidements débouchent radialement vers l'extérieur directement en regard du pont transversal externe **34.** Entre les évidements, donc entre les tronçons de galerie parallèles **54a, 54b, 54c, 54d,** l'âme **50** en matériau alvéolaire à cellules fermées forme donc des cloisons **50a, 50b, 50c, 50d** qui s'étendent radialement vers le haut jusqu'au contact du pont transversal externe **34.** De la sorte, on comprend qu'on obtient ainsi une galerie **54** périphérique de mise à l'air libre qui présente une grande surface d'interface avec la face interne du pont transversal externe **34,** de manière à pouvoir recueillir toute fuite locale de gaz sous pression au niveau de ce pont transversal externe. Dans le même temps, les cloisons **50a, 50b, 50c, 50d** forment des zones d'appui rapprochées et réparties régulièrement pour le pont transversal externe **34,** au bénéfice de la résistance mécanique de celui-ci. Dans ce mode réalisation aussi, un ou plusieurs tronçons de galerie parallèles **54a, 54b, 54c, 54d,** ou tous les tronçons de galerie parallèles **54a, 54b, 54c, 54d** pourraient être emplis d'un matériau perméable au gaz tel que discuté plus haut en référence à la **Fig. 10****.**

## Revendications

1. Jante **(12)** pour une roue de cycle ayant un axe de révolution (**A1**), dans laquelle :
- la jante comporte un corps de jante **(30)** qui comprend deux parois latérales **(32)** et un pont transversal externe **(34)** qui relie les deux parois latérales **(32)** ;
- les deux parois latérales **(32)** du corps de jante **(30)** ont chacune une portion radiale externe **(36)** qui s'étend radialement vers l'extérieur par rapport à l'axe de révolution (**A1**) et par rapport au pont transversal externe **(34)** de sorte que les portions radiales externes **(36)** et le pont transversal externe **(34)** délimitent une gorge d'accueil **(22)** qui est ouverte radialement vers l'extérieur et qui est destinée à accueillir un bandage pneumatique **(18)** gonflé par une pression gazeuse ;
- les deux parois latérales **(32)** du corps de jante sont réunies à leur extrémité radiale interne par une portion radiale interne **(48)** du corps de jante **(30)** pour délimiter, radialement vers l'intérieur par rapport au pont transversal externe **(34),** un espace intérieur **(31)** fermé par les deux parois latérales **(32)** et par le pont transversal externe **(34),** l'espace intérieur **(31)** comportant au moins un compartiment principal **(33)** empli d'une âme **(50)** en matériau de remplissage ;
**caractérisée en ce que** la jante **(12)** comporte au moins une galerie périphérique de mise à l'air libre **(54)** qui est perméable aux gaz, qui communique fluidiquement avec le compartiment principal **(33)** et qui communique fluidiquement par au moins un évent de mise à l'air libre **(56)** avec l'extérieur du corps de jante.

2. Jante selon la revendication **1, caractérisée en ce que** la galerie périphérique de mise à l'air libre **(54)** est une galerie creuse.

3. Jante selon l'une des revendications **1** ou **2, caractérisée en ce que** la galerie périphérique de mise à l'air libre **(54)** est une galerie au moins partiellement emplie d'un matériau perméable aux gaz.

4. Jante selon l'une quelconque des revendications précédentes, **caractérisée en ce que** la galerie périphérique de mise à l'air libre **(54)** est aménagée dans le compartiment principal **(33).**

5. Jante selon l'une quelconque des revendications précédentes, **caractérisée en ce que** la galerie périphérique de mise à l'air libre **(54)** est aménagée dans l'âme **(50)** en matériau de remplissage de la jante.

6. Jante selon l'une quelconque des revendications précédentes, **caractérisée en ce que** la galerie périphérique de mise à l'air libre **(54)** est une galerie creuse formée par un évidement dans l'âme **(50)** en matériau alvéolaire à cellules fermées de la jante **(12).**

7. Jante selon l'une quelconque des revendications précédentes, **caractérisée en ce que** la galerie périphérique de mise à l'air libre **(54)** est aménagée dans l'âme **(50)** en matériau de remplissage de la jante **(12),** à distance des parois **(32, 34, 48)** qui délimitent l'espace intérieur **(31).**

8. Jante selon l'une quelconque des revendications **1** à **7, caractérisée en ce que** la galerie périphérique de mise à l'air libre est aménagée au contact d'une face interne **(39)** du pont transversal externe **(34).**

9. Jante selon l'une quelconque des revendications précédentes, **caractérisée en ce que** la galerie périphérique de mise à l'air libre est aménagée entre le pont transversal externe **(34)** et un second pont transversal **(60)** qui relie les deux parois latérales **(32)** du corps de jante **(30)** et qui est agencé radialement vers l'intérieur par rapport au pont transversal externe **(34)** de manière à délimiter, entre le pont transversal externe **(34)** et le second pont transversal **(60),** un compartiment secondaire **(35)** distinct du compartiment principal **(33).**

10. Jante selon la revendication **9, caractérisée en ce que** le compartiment secondaire est un espace vide.

11. Jante selon l'une quelconque des revendications **1** à **3, caractérisée en ce que** la galerie périphérique de mise à l'air libre **(54)** est aménagée au moins en partie dans le pont transversal externe **(34).**

12. Jante selon la revendication **11, caractérisée en ce que** la galerie périphérique de mise à l'air libre **(54)** est aménagée dans une face externe **(38)** du pont transversal externe **(34)** qui est tournée vers la gorge d'accueil **(22),** la galerie périphérique de mise à l'air libre **(54)** formant une rainure **(40)** ouverte en direction de la gorge d'accueil **(22),** et **en ce que** la jante **(12)** comporte un ruban de fond de jante **(51)** qui est rapporté sur la face externe **(38)** du pont transversal externe **(34)** et qui referme la rainure **(40)** de manière étanche par rapport à la gorge d'accueil **(22).**

13. Jante selon l'une quelconque des revendications précédentes, **caractérisée en ce que** la galerie périphérique de mise à l'air libre **(54)** relie fluidiquement entre eux une pluralité d'évidements **(24, 26)** formés dans l'espace intérieur **(21)** du corps de jante **(30).**

14. Jante selon l'une quelconque des revendications précédentes, **caractérisée en ce que** l'âme **(50)** en matériau de remplissage comporte des évidements **(26)** qui sont destinés à accueillir des moyens de fixation **(52)** de rayons **(16),** et **en ce que** plusieurs évidements **(26)** qui sont destinés à accueillir des moyens de fixation de rayons sont reliés fluidiquement à la même galerie périphérique de mise à l'air libre **(54).**

15. Jante selon l'une quelconque des revendications précédentes, **caractérisée en ce que** l'âme **(50)** en matériau de remplissage comporte un évidement **(24)** pour le passage d'une valve **(20)** de gonflage du bandage pneumatique **(18),** et **en ce que** ledit évidement **(24)** est relié fluidiquement à la galerie périphérique de mise à l'air libre **(54).**

16. Jante selon l'une quelconque des revendications précédentes, **caractérisée en ce que** la galerie périphérique de mise à l'air libre **(54)** comporte plusieurs tronçons **(54a, 54b, 54c, 54d)** qui sont reliés fluidiquement entre eux.

17. Jante selon l'une quelconque des revendications précédentes, **caractérisée en ce que** la galerie périphérique de mise à l'air libre **(54)** comporte plusieurs tronçons de galerie périphérique de mise à l'air libre qui sont reliés fluidiquement entre eux et qui s'étendent au moins en partie le long d'un secteur angulaire commun autour de l'axe de révolution (**A1**).

18. Jante selon l'une quelconque des revendications précédentes, **caractérisée en ce que** la jante **(12)** comporte plusieurs galeries périphériques de mise à l'air libre distinctes qui sont isolées fluidiquement l'une de l'autre et qui communiquent chacune fluidiquement par au moins un évent de mise à l'air libre **(56)** avec l'extérieur du corps de jante **(30).**

19. Jante selon l'une quelconque des revendications précédentes, **caractérisée** ce que la galerie périphérique de mise à l'air libre s'étend sur au moins 45 degrés d'angle autour de l'axe de révolution (**A1**), de préférence sur au moins 90 degrés d'angle autour de l'axe de révolution (**A1**), de préférence sur au moins 180 degrés d'angle autour de l'axe de révolution (**A1**), plus préférentiellement sur 360 degrés d'angle autour de l'axe de révolution (**A1**).

20. Jante selon l'une quelconque des revendications précédentes, **caractérisée en ce que** l'évent de mise à l'air libre **(56)** comporte une valve anti retour **(28).**

21. Jante selon l'une quelconque des revendications précédentes, **caractérisée en ce que** le corps de jante **(30)** est réalisé en matériau composite.

22. Roue pour cycle, **caractérisée en ce qu'**elle comporte une jante **(12)** selon l'une quelconque des revendications précédentes.

23. Ensemble de roulage comportant une roue **(10)** selon la revendication **22,** et un bandage pneumatique **(18)** monté dans la gorge d'accueil **(22)** de la jante **(12).**

## Patentansprüche

1. Felge (12) für ein Rad eines Fahrrades mit einer Rotationsachse (A1), wobei:
- die Felge einen Felgenkörper (30) aufweist, der zwei Seitenwände (32) sowie eine äußere Querbrücke (34), welche die beiden Seitenwände (32) verbindet, umfasst,
- die beiden Seitenwände (32) des Felgenkörpers (30) jeweils einen äußeren radialen Abschnitt (36) aufweisen, der sich in Bezug auf die Rotationsachse (A1) und in Bezug auf die äußere Querbrücke (34) radial nach außen erstreckt, so dass die äußeren radialen Abschnitte (36) und die äußere Querbrücke (34) eine Aufnahmenut (22) begrenzen, die radial nach außen offen ist und die dazu bestimmt ist, einen mit einem Gasdruck befüllten Luftreifen (18) aufzunehmen,
- die beiden Seitenwände (32) des Felgenkörpers an ihrem inneren radialen Ende durch einen inneren radialen Abschnitt (48) des Felgenkörpers (30) verbunden sind, um in Bezug auf die äußere Querbrücke (34) radial nach innen einen durch die beiden Seitenwände (32) und durch die äußere Querbrücke (34) abgeschlossenen Innenraum (31) zu begrenzen, wobei der Innenraum (31) wenigstens ein mit einem Kern (50) aus Füllmaterial gefülltes Hauptfach (33) umfasst,
**dadurch gekennzeichnet, dass** die Felge (12) wenigstens einen umlaufenden Entlüftungskanal (54) umfasst, der für Gase durchlässig ist, der mit dem Hauptfach (33) in Fluidverbindung steht und der über wenigstens eine Entlüftungsöffnung (56) mit der Außenseite des Felgenkörpers in Fluidverbindung steht.

2. Felge nach Anspruch 1, **dadurch gekennzeichnet, dass** der umlaufende Entlüftungskanal (54) ein Hohlkanal ist.

3. Felge nach einem der Ansprüche 1 oder 2, **dadurch gekennzeichnet, dass** der umlaufende Entlüftungskanal (54) ein wenigstens teilweise mit einem gasdurchlässigen Material gefüllter Kanal ist.

4. Felge nach einem der vorhergehenden Ansprüche, **dadurch gekennzeichnet, dass** der umlaufende Entlüftungskanal (54) in dem Hauptfach (33) angeordnet ist.

5. Felge nach einem der vorhergehenden Ansprüche, **dadurch gekennzeichnet, dass** der umlaufende Entlüftungskanal (54) in dem Kern (50) aus Füllmaterial der Felge angeordnet ist.

6. Felge nach einem der vorhergehenden Ansprüche, **dadurch gekennzeichnet, dass** der umlaufende Entlüftungskanal (54) ein Hohlkanal ist, der durch eine Aussparung in dem Kern (50) aus geschlossenzelligem Wabenmaterial der Felge (12) gebildet ist.

7. Felge nach einem der vorhergehenden Ansprüche, **dadurch gekennzeichnet, dass** der umlaufende Entlüftungskanal (54) in dem Kern (50) aus Füllmaterial der Felge (12) mit Abstand von den Wänden (32, 34, 48), welche den Innenraum (31) begrenzen, angeordnet ist.

8. Felge nach einem der Ansprüche 1 bis 7, **dadurch gekennzeichnet, dass** der umlaufende Entlüftungskanal in Kontakt mit einer Innenseite (39) der äußeren Querbrücke (34) angeordnet ist.

9. Felge nach einem der vorhergehenden Ansprüche, **dadurch gekennzeichnet, dass** der umlaufende Entlüftungskanal zwischen der äußeren Querbrücke (34) und einer zweiten Querbrücke (60) angeordnet ist, die die beiden Seitenwände (32) des Felgenkörpers (30) verbindet und die in Bezug auf die äußere Querbrücke (34) radial nach innen angeordnet ist, um zwischen der äußeren Querbrücke (34) und der zweiten Querbrücke (60) ein von dem Hauptfach (33) getrenntes Nebenfach (35) zu begrenzen.

10. Felge nach Anspruch 9, **dadurch gekennzeichnet, dass** das Nebenfach ein Leerraum ist.

11. Felge nach einem der Ansprüche 1 bis 3, **dadurch gekennzeichnet, dass** der umlaufende Entlüftungskanal (54) wenigstens teilweise in der äußeren Querbrücke (34) angeordnet ist.

12. Felge nach Anspruch 11, **dadurch gekennzeichnet, dass** der umlaufende Entlüftungskanal (54) in einer Außenseite (38) der äußeren Querbrücke (34) angeordnet ist, welche der Aufnahmenut (22) zugewandt ist, wobei der umlaufende Entlüftungskanal (54) eine in Richtung der Aufnahmenut (22) offene Nut (40) bildet, und dass die Felge (12) ein Felgenband (51) umfasst, das an der Außenseite (38) der äußeren Querbrücke (34) angesetzt ist und das die Nut (40) gegenüber der Aufnahmenut (22) dicht abschließt.

13. Felge nach einem der vorhergehenden Ansprüche, **dadurch gekennzeichnet, dass** der umlaufende Entlüftungskanal (54) eine Vielzahl von Ausnehmungen (24, 26), welche in dem Innenraum (21) des Felgenkörpers (30) ausgebildet sind, fluidisch miteinander verbindet.

14. Felge nach einem der vorhergehenden Ansprüche, **dadurch gekennzeichnet, dass** der Kern (50) aus Füllmaterial Aussparungen (26) aufweist, die dazu bestimmt sind, Mitteln zur Befestigung (52) von Speichen (16) aufzunehmen, und dass mehrere Aussparungen (26), die dazu bestimmt sind, Speichenbefestigungsmittel aufzunehmen, mit dem gleichen umlaufenden Entlüftungskanal (54) fluidisch verbunden sind.

15. Felge nach einem der vorhergehenden Ansprüche, **dadurch gekennzeichnet, dass** der Kern (50) aus Füllmaterial eine Aussparung (24) für den Durchgang eines Ventils (20) zum Aufpumpen des Luftreifens (18) aufweist, und dass die Aussparung (24) mit dem umlaufenden Entlüftungskanal (54) fluidisch verbunden ist.

16. Felge nach einem der vorhergehenden Ansprüche, **dadurch gekennzeichnet, dass** der umlaufende Entlüftungskanal (54) mehrere Abschnitte (54a, 54b, 54c, 54d) umfasst, die fluidisch miteinander verbunden sind.

17. Felge nach einem der vorhergehenden Ansprüche, **dadurch gekennzeichnet, dass** der umlaufende Entlüftungskanal (54) mehrere umlaufende Entlüftungskanal-Abschnitte umfasst, die fluidisch miteinander verbunden sind und die sich wenigstens teilweise entlang eines gemeinsamen Winkelsektors um die Rotationsachse (A1) herum erstrecken.

18. Felge nach einem der vorhergehenden Ansprüche, **dadurch gekennzeichnet, dass** die Felge (12) mehrere separate umlaufende Entlüftungskanäle umfasst, die fluidisch voneinander getrennt sind und die jeweils über wenigstens eine Entlüftungsöffnung (56) mit der Außenseite des Felgenkörpers (30) in Fluidverbindung stehen.

19. Felge nach einem der vorhergehenden Ansprüche, **dadurch gekennzeichnet, dass** sich der umlaufende Entlüftungskanal über wenigstens 45 Winkelgrad um die Rotationsachse (A1), vorzugsweise über wenigstens 90 Winkelgrad um die Rotationsachse (A1), vorzugsweise über wenigstens 180 Winkelgrad um die Rotationsachse (A1), weiter bevorzugt über 360 Winkelgrad um die Rotationsachse (A1) erstreckt.

20. Felge nach einem der vorhergehenden Ansprüche, **dadurch gekennzeichnet, dass** die Entlüftungsöffnung (56) ein Rückschlagventil (28) umfasst.

21. Felge nach einem der vorhergehenden Ansprüche, **dadurch gekennzeichnet, dass** der Felgenkörper (30) aus Verbundmaterial hergestellt ist.

22. Rad für ein Fahrrad, **dadurch gekennzeichnet, dass** es eine Felge (12) nach einem der vorhergehenden Ansprüche umfasst.

23. Rollanordnung, umfassend ein Rad (10) nach Anspruch 22 und einen Luftreifen (18), der in der Aufnahmenut (22) der Felge (12) angebracht ist.

## Claims

1. A rim (12) for a cycle wheel having an axis of revolution (A1), wherein:
- the rim includes a rim body (30) which comprises two side walls (32) and an outer transverse bridge (34) which connects the two side walls (32);
- the two side walls (32) of the rim body (30) each have an outer radial portion (36) which extends radially outwardly relative to the axis of revolution (A1) and relative to the outer transverse bridge (34) so that the outer radial portions (36) and the outer transverse bridge (34) delimit a receiving groove (22) which is open radially outwardly and which is intended to receive a pneumatic tire (18) inflated by a gas pressure;
- the two side walls (32) of the rim body are joined at their inner radial end by an inner radial portion (48) of the rim body (30) to delimit, radially inwardly relative to the outer transverse bridge (34), an interior space (31) closed by the two side walls (32) and by the outer transverse bridge (34), the interior space (31) including at least one main compartment (33) filled with a core (50) made of filling material;
**characterized in that** the rim (12) includes at least one peripheral venting gallery (54) which is permeable to gases, which fluidly communicates with the main compartment (33) and which fluidly communicates by at least one venting vent (56) with the outside of the rim body.

2. The rim according to claim 1, **characterized in that** the peripheral venting gallery (54) is a hollow gallery.

3. The rim according to any of claims 1 or 2, **characterized in that** the peripheral venting gallery (54) is a gallery at least partially filled with a gas-permeable material.

4. The rim according to any one of the preceding claims, **characterized in that** the peripheral venting gallery (54) is arranged in the main compartment (33).

5. The rim according to any one of the preceding claims, **characterized in that** the peripheral venting gallery (54) is arranged in the filling material core (50) of the rim.

6. The rim according to any one of the preceding claims, **characterized in that** the peripheral venting gallery (54) is a hollow gallery formed by a recess in the core (50) made of cellular material with closed cells of the rim (12).

7. The rim according to any one of the preceding claims, **characterized in that** the peripheral venting gallery (54) is arranged in the filling material core (50) of the rim (12), at a distance from the walls (32, 34, 48) which delimit the interior space (31).

8. The rim according to any one of claims 1 to 7, **characterized in that** the peripheral venting gallery is arranged in contact with an inner face (39) of the outer transverse bridge (34).

9. The rim according to any one of the preceding claims, **characterized in that** the peripheral venting gallery is arranged between the outer transverse bridge (34) and a second transverse bridge (60) which connects the two side walls (32) of the rim body (30) and which is arranged radially inwardly relative to the outer transverse bridge (34) so as to delimit, between the outer transverse bridge (34) and the second transverse bridge (60), a secondary compartment (35) separate from the main compartment (33).

10. The rim according to claim 9, **characterized in that** the secondary compartment is an empty space.

11. The rim according to any one of claims 1 to 3, **characterized in that** the peripheral venting gallery (54) is arranged at least partly in the outer transverse bridge (34).

12. The rim according to claim 11, **characterized in that** the peripheral venting gallery (54) is arranged in an outer face (38) of the outer transverse bridge (34) which is turned towards the receiving groove (22), the peripheral venting gallery (54) forming a slot (40) open in the direction of the receiving groove (22), and **in that** the rim (12) includes a rim strip (51) which is added onto the outer face (38) of the outer transverse bridge (34) and which closes the slot (40) in a sealed manner relative to the receiving groove (22).

13. The rim according to any one of the preceding claims, **characterized in that** the peripheral venting gallery (54) fluidly connects together a plurality of recesses (24, 26) formed in the interior space (21) of the rim body (30).

14. The rim according to any one of the preceding claims, **characterized in that** the filling material core (50) includes recesses (26) which are intended to receive means (52) for fixing spokes (16), and **in that** several recesses (26) which are intended to receive spoke fixing means are fluidly connected to the same peripheral venting gallery (54).

15. The rim according to any one of the preceding claims, **characterized in that** the filling material core (50) includes a recess (24) for the passage of a valve (20) for inflating the pneumatic tire (18), and **in that** said recess (24) is fluidly connected to the peripheral venting gallery (54).

16. The rim according to any one of the preceding claims, **characterized in that** the peripheral venting gallery (54) includes several segments (54a, 54b, 54c, 54d) which are fluidly connected together.

17. The rim according to any one of the preceding claims, **characterized in that** the peripheral venting gallery (54) includes several peripheral venting gallery segments which are fluidly connected together and which extend at least partly along a common angular sector about the axis of revolution (A1).

18. The rim according to any one of the preceding claims, **characterized in that** the rim (12) includes several separate peripheral venting galleries which are fluidly isolated from each other and which each fluidly communicate by at least one venting vent (56) with the outside of the rim body (30).

19. The rim according to any one of the preceding claims, **characterized in that** the peripheral venting gallery extends over at least 45 angle degrees about the axis of revolution (A1), preferably over at least 90 angle degrees about the axis of revolution (A1), preferably over at least 180 angle degrees about the axis of revolution (A1), more preferably over 360 angle degrees about the axis of revolution (A1).

20. The rim according to any one of the preceding claims, **characterized in that** the venting vent (56) includes a check valve (28).

21. The rim according to any one of the preceding claims, **characterized in that** the rim body (30) is made of composite material.

22. A wheel for a cycle, **characterized in that** it includes a rim (12) according to any one of the preceding claims.

23. A rolling assembly including a wheel (10) according to claim 22, and a pneumatic tire (18) mounted in the receiving groove (22) of the rim (12).
